(19) Europäisches Patentamt
European Patent Office
Office européen des brevets

(11) **EP 4 523 909 A1**

(12) **EUROPEAN PATENT APPLICATION**
published in accordance with Art. 153(4) EPC

(43) Date of publication:
**19.03.2025 Bulletin 2025/12**

(21) Application number: 23803499.5

(22) Date of filing: **28.04.2023**

(51) International Patent Classification (IPC):
**B32B 27/32** (2006.01) **B32B 9/00** (2006.01)
**B32B 27/30** (2006.01) **B32B 27/36** (2006.01)
**B32B 27/40** (2006.01) **B65D 65/40** (2006.01)

(52) Cooperative Patent Classification (CPC):
**B32B 9/00; B32B 27/30; B32B 27/32; B32B 27/36; B32B 27/40; B65D 65/40**

(86) International application number:
**PCT/JP2023/016940**

(87) International publication number:
**WO 2023/219021 (16.11.2023 Gazette 2023/46)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.05.2022 JP 2022078322**

(71) Applicant: **Toyobo Co., Ltd.**
**Kita-ku**
**Osaka-shi, Osaka 530-0001 (JP)**

(72) Inventors:
• **YAMAZAKI, Atsushi**
**Inuyama-shi, Aichi 484-8508 (JP)**
• **KASHIWA, Mitsuhiro**
**Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54) **MULTILAYER PACKAGING MATERIAL**

(57)    An object of the present invention is to provide a packaging material which is formed from a resin having a lower environmental impact and which achieves improved gas barrier property required for a packaging material, increased durability of the gas barrier property, and reduced volatile component. A laminated packaging material including at least one substrate film including a resin layer formed from a polyolefin-based resin as a main constituent component, an adhesive layer, and a heat-sealable resin layer, wherein the at least one substrate film includes a substrate film that is a laminated gas barrier film having a gas barrier layer, a substrate film (a) of the laminated substrate film having the lowest oxygen transmission rate has an oxygen transmission rate (A) of from 30 ml/m²·d·MPa to 1500 ml/m²·d·MPa as measured under conditions of 23°C and 65% RH, a laminated packaging material (p) formed by adhering the substrate film and a heat-sealable resin via the adhesive layer has an oxygen transmission rate (P) of 60 ml/m²·d·MPa or less as measured under the same conditions, and a percentage improvement in barrier values before and after lamination represented by the following Formula (1) is 10 or more.

Formula (1): Percentage improvement in barrier values before and after film lamination = (A/P)

**Description**

TECHNICAL FIELD

The present invention relates to a laminated packaging material used in the packaging of food, pharmaceutical and industrial products. More specifically, the present invention relates to an environmentally friendly laminated packaging material having high gas barrier property, processability, toughness, and convenience feature.

BACKGROUND ART

In recent years, regulations to reduce the use of single-use plastics have been tightened in Europe and other countries around the world. This is due to the growing international awareness of resource recycling and the worsening of the waste problem in emerging countries. Hence, plastic packaging materials for foods and pharmaceuticals are required to have environmental friendliness from the viewpoint of 3R (recycle, reuse, reduce).

As one of the possibilities to make the above environmentally friendly packaging materials, making packaging materials from a single recyclable material, i.e., making packaging materials based on a mono-material approach, has been actively studied. As materials based on the mono-material approach, for example, polyester-based and polyolefin-based materials have been studied.

While there has been a growing demand for packaging materials with low environmental impact as described above, packaging materials are required to be more multifunctional from the viewpoint of convenience. For example, in the case of microwaveable pouches without aluminum foil, the pouches as single packaging bags are required to have gas barrier property, heat resistance, toughness (bag breaking resistance and pinhole resistance), and high sealability. Packaging materials can have these characteristics by laminating different materials each having different functions, and such a structure is generally constructed with three or more layers including a vapor-deposited polyester film laminated on the outside of a bag, a polyamide film as an intermediate layer, and a polyolefin-based heat-sealable resin dry-laminated on the inside (contents side) via an adhesive. Although this structure achieves the desired characteristics, the lamination of different materials reduces recyclability and does not provide such an environmentally friendly packaging materials as described above.

Taking these points into consideration, an ideal design of a packaging material from a single material prepared based on a mono-material approach, which allows the production of a bag with multifunctional properties as described, has been studied.

In the design of a polyester-based packaging material based on a mono-material approach, a polyester-based sealant with improved low-adsorption and heat resistance is disclosed as an alternative to conventional polyolefin-based sealants (for example, Patent Document 1). In the sealant in Patent Document 1, a layer having heat-sealability is separated from another layer, and both of heat-sealability and heat resistance are achieved by independently controlling the raw material compositions of these layers. However, with respect to the heat-sealability, the polyester-based sealant has lower seal strength compared to polyolefin-based sealants. Furthermore, from the viewpoint of heat resistance, the polyester-based sealant cannot withstand harsh treatments such as boiling and retorting treatments.

In contrast, in the design of a polyolefin-based packaging material based on a mono-material approach, a polyolefin-based heat seal resin can be used as a sealant, ensuring sufficient heat-sealability compared to the above polyester-based sealent. Sealants are required to have a certain degree of thickness to develop sufficient heat-sealability and thus make up a large part of packages. In this respect, designing a polyolefin-based packaging based on a mono-material approach has been strongly promoted. However, polyolefin-based packaging materials have the disadvantage of lower gas barrier property compared to conventional packaging materials having a gas barrier property. Although polypropylene films have a water vapor barrier property, the films have the disadvantage of insufficient water vapor barrier property compared to transparent inorganic vapor-deposited polyester films, which generally have a high water vapor barrier property. Further, polypropylene films have significantly low oxygen barrier property.

In response to the above, films obtained by laminating polymer resin compositions generally considered to have relatively high oxygen barrier property, such as polyvinyl alcohol, ethylene vinyl alcohol copolymer, polyvinylidene chloride resin, and polyacrylonitrile, on a polypropylene film have been used (for example, Patent Documents 2 to 4). However, a gas barrier coating film including the above polymer resin composition, for example, the above polyvinyl alcohol and ethylene vinyl alcohol copolymer, has significantly high humidity dependency and thus shows decreased gas barrier property under environment at high humidity. In addition, the gas barrier coating film does not have sufficient heat and humidity resistance to withstand sterilization by boiling and retort treatments. Although polyvinylidene chloride resin and polyacrylonitrile have low humidity dependence, they have insufficient barrier value as an absolute value, and also have the risk of generating harmful substances during disposal and incineration. In addition, the polypropylene film used does not have sufficient heat resistance, thus leading to problems such as a wrinkled appearance and reduced performance caused by heat-induced shrinkage during the printing, lamination, and sterilization processes.

With regard to improving the gas barrier property of the polypropylene film, the development of a stable gas barrier property independent of humidity by laminating an inorganic thin layer has been studied (for example, Patent Document 5). However, the resulting film has lower barrier value as an absolute value (particularly, oxygen barrier property) than conventional vapor-deposited polyester films, and also has the disadvantage of vulnerability to physical damage compared to the above barrier film of a coating type. Particularly, polypropylene films have lower dimensional stability than polyester films and thus stretches and shrinks easily, causing disruption of a barrier layer. A barrier material obtained through deposition on a polyolefin-based sealant has been studied (for example, Patent Document 6), but the barrier material cannot develop sufficient oxygen barrier property despite the water vapor barrier property developed.

To solve the above problems, further lamination of a protection layer with a gas barrier property on the inorganic thin layer has been studied. For example, in one method, a water-soluble polymer, an inorganic layered compound, and a metallic alkoxide or hydrolysate thereof are coated on the inorganic thin layer, to form a composite of an inorganic substance with the water-soluble polymer containing the inorganic layered compound on the inorganic thin layer by the sol-gel method (for example, Patent Document 7). The method enables improvement in gas barrier property, allowing for reduced physical damage to the inorganic thin layer. However, the damage of extreme physical loads by, for example, bending treatment, to the inorganic thin film layer cannot be ignored. Particularly, when a film itself has high barrier property, the layer tends to break, and this tendency increases worsening of the barrier property due to bending load. In the case of a film with high barrier property, volatile components such as residual solvents and foaming gases tend to remain in the layers during the application of an adhesive, disadvantageously causing migration of the volatile components into food and appearance defects. The volatile components can be effectively reduced by extending the post-processing ageing time. However, extension of the ageing time may affect delivery schedules, making it is impossible to have the ageing time so long. From the viewpoint of environmental impact, an environmentally friendly coating material is required to be used for forming the protection layer. However, an increase in processing steps for laminating the protection layer and the use of solvents in the steps may have significant impact on the environment. Further, laminating a protection layer may disadvantageously increase costs.

CITATION LIST

PATENT DOCUMENT

Patent Document 1:    JP-A-2017-165059
Patent Document 2:    JP-A-2000-52501
Patent Document 3:    JP-A-H4-359033
Patent Document 4:    JP-A-2003-231221
Patent Document 5:    WO 2017/221781
Patent Document 6:    JP-B2-3318479
Patent Document 7:    WO 2021/112243

SUMMARY OF THE INVENTION

PROBLEMS TO BE SOLVED BY THE INVENTION

In these patent documents, packaging materials having environmental friendliness and convenience features have not yet been designed because it was difficult to achieve both the production of packaging materials based on a mono-material approach and characteristics required for packaging materials, in particular, a gas barrier property and its durability, and early reduction of residual volatile components.

The present invention has been done against such backgrounds of the conventional arts, and it is an object of the present invention to provide a packaging material having a laminated structure formed from an environmentally friendly resin, enabling improvements in the gas barrier property required for a packaging material and its durability, and early reduction of a volatile component in the packaging material.

SOLUTION TO THE PROBLEMS

The present inventors have found that the lamination of the laminated film, in which a barrier layer with a gas barrier property in a given range is laminated on a substrate film including a polyolefin-based resin layer, via an adhesive enables an early reduction of a volatile component, great improvement in a barrier property after lamination, and maintenance of the barrier property after the application of physical loads by, for example, bending. Further, the present inventors have found that laminating a sealant formed from a polyolefin-based component provides an environmentally friendly packaging material having high convenience feature, and completed the present invention.

The present invention has the following features.

1. A laminated packaging material comprising at least one substrate film including a resin layer formed from a polyolefin-based resin as a main constituent component, an adhesive layer, and a heat-sealable resin layer, wherein the at least one substrate film comprises a substrate film that is a laminated gas barrier film having a gas barrier layer,

a substrate film (a) of the laminated substrate films having the lowest oxygen transmission rate has an oxygen transmission rate (A) of from 30 ml/m$^2$·d·MPa to 1500 ml/m$^2$·d·MPa as measured under conditions of 23°C and 65% RH,

a laminated packaging material (p) formed by adhering the substrate film and a heat-sealable resin via the adhesive layer has an oxygen transmission rate (P) of 60 ml/m$^2$·d·MPa or less as measured under the same conditions, and

a percentage improvement in barrier values before and after lamination represented by the following Formula (1) is 10 or more.

Formula (1): Percentage improvement in barrier values before and after film lamination = (A/P)

2. The laminated packaging material according to 1, wherein the laminated packaging material has an oxygen transmission rate (G) of 65 ml/m$^2$·d·MPa or less after being twisted and bent 25 times at a temperature of 23°C in a twist and bend test with a Gelbo type flex-cracking tester.

3. The laminated packaging material according to 1 or 2, wherein the laminated packaging material has a time of 30 hours or shorter until a volatile component completely evaporates immediately after the formation of the laminated packaging material (p) formed by adhering the substrate film and a heat-sealable resin via an adhesive.

4. The laminated packaging material according to any one of 1 to 3, wherein the at least one substrate film comprises the substrate film (a) and another substrate film (b), the substrate film (b) is the laminated barrier film including the resin layer and a gas barrier layer, and the resin layer constituting the substrate film (a) and the resin layer constituting the substrate film (b) are formed from the same type of polyolefin-based resin as a main constituent component.

5. The laminated packaging material according to any one of 1 to 4, wherein the at least one substrate film comprises no more than two substrate films.

6. The laminated packaging material according to any one of 1 to 5, wherein the resin layer constituting the substrate film and the heat-sealable resin layer are formed from the same type of polyolefin-based resin as a main constituent component.

7. The laminated packaging material according to any one of 1 to 6, wherein the adhesive layer is formed from a polyurethane-based, polyester-based, or polyamine-based resin material.

8. The laminated packaging material according to any one of 1 to 7, wherein the gas barrier layer is an inorganic thin film layer formed from any one of aluminum, aluminum oxide, silicon oxide, and a composite oxide of silicon oxide and aluminum oxide.

9. The laminated packaging material according to any one of 1 to 8, wherein the gas barrier layer is a coating layer formed from any one of polyvinyl alcohol resin, polyester resin, and polyurethane resin.

10. The laminated packaging material according to any one of 1 to 9, wherein the laminated packaging material further comprises an anchor coat layer between the substrate film and the gas barrier layer.

11. The laminated packaging material according to any one of 1 to 10, wherein the laminated packaging material is applicable to boiling or retort treatment.

12. The laminated packaging material according to any one of 1 to 10, wherein the laminated packaging material is applicable to heating by a microwave oven.

13. A packaging bag comprising the laminated packaging material according to any one of 1 to 12.

14. A packaging formed by covering an object with the laminated packaging material according to any one of 1 to 12 or the packaging bag according to 13.

ADVANTAGEOUS EFFECTS OF THE INVENTION

According to the above art, the present inventors can provide an environmentally friendly packaging material having required barrier property and durability and less volatile component.

DESCRIPTION OF EMBODIMENTS

The laminated packaging material of the present invention includes at least one substrate film including a resin layer formed from a polyolefin-based resin as a main constituent component, an adhesive layer, and a heat-sealable resin layer, wherein the at least one substrate film comprises a substrate film that is a laminated gas barrier film having a gas barrier layer, a substrate film (a) of the laminated substrate films having the lowest oxygen transmission rate has an oxygen transmission rate (A) of from 30 ml/m$^2$·d·MPa to 1500 ml/m$^2$·d·MPa as measured under conditions of 23°C and 65% RH, and a percentage improvement in barrier values before and after lamination is 10 or more when a laminated packaging material (p) formed by adhering the substrate film and a heat-sealable resin via the adhesive layer has an oxygen transmission rate (P) as measured under the same conditions. The above "a main constituent component" means that the main component accounts for 50% by mass or more of the constituent components.

Hereinafter, the present invention present invention will be described in detail.

[Substrate film formed from polyolefin-based resin as a main constituent component]

The packaging material of the present invention includes a substrate film that is formed from the polyolefin-based resin as a main constituent component. The substrate film is preferably a substrate film that is formed from the polyolefin-based resin as a main constituent component (hereinafter "polypropylene-based resin film") and is more preferably a stretched film. The stretched polypropylene-based resin film used as the substrate film in the present invention is preferably a biaxially stretched film. A known biaxially stretched polypropylene-based resin film may be used as the biaxially stretched polypropylene-based resin film, and raw materials and blending ratios of the film are not particularly limited. For example, a polypropylene homopolymer (propylene homopolymer), and a random copolymer or block copolymer of propylene as a main component and one or two or more of $\alpha$-olefins selected from ethylene, butene, pentene, and hexene, and a mixture of two or more of these polymers may be used. Further, known additives such as an antioxidant, anti-static agent, and a plasticizing agent may be added for the purpose of improving the physical characteristics. For example, a petroleum resin and/or terpene resin may be added.

In the present invention, the polypropylene-based resin constituting the substrate film is preferably a propylene homopolymer substantially free from comonomers other than propylene. Even if the polypropylene-based resin contains a comonomer, a comonomer amount is preferably 0.5 mol% or less. The upper limit of the comonomer amount is more preferably 0.3 mol%, and further preferably 0.1 mol%. The comonomer amount within the range can improve crystallinity and thus reduce the dimensional changes at high temperatures, i.e., the elongation rate upon heating to a certain temperature (hereinafter "a heating elongation rate") can be reduced, resulting in improved heat resistance. Improving the heat resistance can stabilize the lamination process of the barrier layer, and the barrier property can be stabilized as a result. A small amount of comonomer may be contained if the amount does not significantly reduce the crystallinity.

The biaxially stretched polypropylene-based resin film used in the present invention may be a single-layer film or a laminated-type film. The laminated-type film is preferred to achieve the object of the present invention. The type of a laminated body, the number of laminated layers, and a lamination method are not particularly limited and can be determined based on any known method, and the laminate strength and the adhesion strength of a coating agent are preferably improved by controlling the surface roughness and flexibility of the substrate film surface.

As a method to improve the laminate strength of the substrate film and an interfacial adhesion strength between the substrate film and the inorganic thin film layer and the coating agent, a mixture of two or more polypropylene-based resins having different melt flow rates (MFR) may be used as the polypropylene-based resin for forming the surface layer of the substrate film.

When a difference in the melt flow rates (MFR) between the at least two polypropylene-based resins in the mixture is small, it is thought that the differences in crystallization rates and degrees of crystallization of the polypropylene-based resins may not be significantly different and subtle surface irregularities may be easily formed. However, the surface irregularities may be enlarged by spherulites if the cooling rate of the unstretched sheet is slow in the production of the film, and the surface irregularities may also be enlarged if the stretching temperature is too high in the longitudinal or the transverse stretching; hence, attentions should be paid to this phenomenon.

Each of the polypropylene-based resins may be a polypropylene homopolymer free from copolymerization components, or a polypropylene resin obtained by copolymerization of 5.0 mol% or less of ethylene and/or $\alpha$-olefin having four or more carbon atoms. In the polypropylene resin, the amount of the copolymerized component is preferably 4.0 mol% or less, and more preferably 3.5 mol% or less. In the polypropylene resin, the amount of the copolymerized component is preferably 1.0 mol% or more, more preferably 1.5 mol% or more, further preferably 2.0 mol% or more, and particularly preferably 2.5 mol% or more.

Examples of the $\alpha$-olefin having four or more carbon atoms include butene-1, hexene-1, 4-methyl-pentene-1, and octene-1. In addition, other copolymerization components such as maleic acid, which has polarity, may also be used.

The lower limit of a xylene-soluble content of the polypropylene-based resin constituting the substrate film is preferably 0.1% by mass from a practical viewpoint. The upper limit of the xylene-soluble content is preferably 7% by mass, more preferably 6% by mass, and further preferably 5% by mass. The xylene-soluble content within the above range enables increased crystallinity and thus a lower heating elongation rate, leading to improved heat resistance.

In the present invention, the polypropylene-based resin has the lower limit of a melt flow rate (MFR) (230°C, 2.16 kgf) of preferably 0.5 g/10min. The lower limit of the MFR is more preferably 1.0 g/10min, further preferably 2.0 g/10min, particularly preferably 4.0 g/10min, and most preferably 6.0 g/10min. The MFR within the above range can reduce a mechanical load, enabling facilitated extrusion and stretching. The upper limit of the MFR is preferably 20 g/10min. The upper limit of MFR is more preferably 17 g/10min, further preferably 16 g/10min, and particularly preferably 15 g/10min. The MFR within the above range enables facilitated stretching and reduced thickness unevenness. In addition, the MFR within the above range enables increases in stretching temperature and heat fixing temperature, leading to a lower heating elongation rate and thus improved heat resistance.

From the viewpoint of heat resistance, the above substrate film may be a uniaxially stretched film in the longitudinal direction (MD direction) or the transverse direction (TD direction), and is preferably a biaxially stretched film. In the present invention, the film having a low heating elongation rate at high temperatures and high heat resistance, which cannot be expected from conventional polypropylene films, can be obtained by using the above preferred raw materials and stretching in at least one axis. The stretching method includes a simultaneous biaxial stretching method and a sequential biaxial stretching method, and a sequential biaxial stretching method is preferred from the viewpoint of planarity, dimensional stability, and thickness unevenness.

In the sequential biaxial stretching method, an unstretched sheet is obtained by melting the polypropylene-based resin by heating at a resin temperature controlled to 200°C or higher and 280°C or lower using a single or twin screw extruder, and extruding the molten resin into a sheet shape from a T-die onto a chill roll set at a temperature of 10°C or higher and 100°C or lower. Subsequently, the unstretched sheet is stretched in the longitudinal direction (MD direction) at a temperature of 120°C or higher and 165°C or lower by 3.0 times or more and 8.0 times or less by roll stretching. After preheating in a tenter, the uniaxially stretched film is stretched in the transverse direction (TD direction) at a temperature of 155°C or higher and 175°C or lower by 4.0 times or more and 20.0 times or less. After the biaxial stretching, the film may be further subjected to heat fixing at a temperature of 165°C or higher and 175°C or lower while being relaxed by 1% or more and 15% or less.

The substrate film of the present invention is preferably formed by the following method to have the heating elongation rate within the above range.

The upper limit of the stretching temperature in the longitudinal direction (MD) is preferably film melting point (Tm) -7°C, more preferably Tm -10°C, and further preferably Tm -12°C. The stretching temperature within the above range can easily reduce the heating elongation rate and prevent stretching difficulty caused by fusing to a stretching roll, eliminating degradation of film quality. The stretching in the longitudinal direction may be conducted using three or more pairs of stretching rolls in multiple stages of two or more. The multi-stage stretching can reduce the distortion caused by stretching, thereby reducing the heating elongation rate.

The upper limit of the stretching ratio in the transverse direction (TD) is 15 times, more preferably 12 times, and further preferably 10 times. The stretching ratio higher than the above range may cause increased heating elongation rate and rupture during stretching.

The lower limit of the stretching temperature in TD is preferably 150°C, more preferably 152°C, further preferably 154°C, and particularly preferably 156°C. When the stretching temperature in TD is 150°C or higher, the film in sufficiently softened state may be stretched, and the heating elongation rate can be easily reduced. The upper limit of the stretching temperature in TD is preferably 164°C, more preferably 162°C, and further preferably 160°C. To lower the heating elongation rate, a higher temperature is preferred.

In the heat fixing treatment, which is conducted after the stretching in the transverse direction (TD), the lower limit of the heat fixing temperature is preferably 168°C, more preferably 170°C, and further preferably 173°C. The heat fixing temperature of 168°C or higher can prevent the heating elongation rate from increasing and eliminate the need for a longer treatment to reduce the heating elongation rate.

During the heat fixing, the film is preferably subjected to relaxing. The lower limit of the relaxing rate is preferably 2%, and more preferably 3%. The relaxing rate less than the limit may cause increased heating elongation rate.

Additionally, the film produced in the above process may be annealed off-line to reduce the heat shrinkage rate once the film is wound into a roll shape.

The substrate film used in the present invention may contain particles to form protrusions on the film surface, which can impart handling property (for example, winding property after lamination). Examples of the particle that the substrate film may contain include inorganic particles such as silica, kaolinite, talc, calcium carbonate, zeolite, and alumina; and heat-resistant polymer particles such as acrylic, PMMA, nylon, polystyrene, polyester, and benzoguanamine-formalin condensate particles. The substrate film may contain a small amount of the particle from the viewpoint of transparency, and the amount is, for example, preferably 1 ppm or more and 1000 ppm or less. The particles have an average particle size of preferably from 1.0 $\mu$m to 3.0 $\mu$m, and more preferably from 1.0 $\mu$m to 2.7 $\mu$m. The average particle

size as used herein is an average of Feret's diameters measured by a method involving capturing images using a scanning electron microscope and measuring the Feret's diameters of particles in the horizontal direction using an image analyzer. Further, a particle having a refractive index closes to that of the resin used is preferably selected from the viewpoint of transparency. To achieve various characteristics, if needed, the film may contain an antioxidant, ultraviolet absorber, anti-static agent, dye, lubricant, nucleating agent, adhesive, antifogging agent, flame retardant, anti-blocking agent, and inorganic or organic filler.

In addition to the polypropylene-based resin used in the present invention, another resin may be used to improve mechanical properties of the substrate film, adhesion with an ink layer and an adhesive layer laminated on the above gas barrier coating layer, and to reduce the environmental impact, as long as the purpose of the present invention is not imparted. Examples of the resin include a polyethylene resin, different polypropylene resin from the above polypropylene resin, a random copolymer that is a copolymer of propylene and ethylene and/or an $\alpha$-olefin having four or more carbon atoms, and elastomers.

In the present invention, the polyethylene-based resin that can be used for the substrate film is a resin formed from ethylene as a main component. Examples of the polyethylene-based resin include ethylene homopolymers such as a high-pressure low-density polyethylene, linear low-density polyethylene, medium-density polyethylene, and high-density polyethylene; crystalline, low-crystalline, and amorphous random copolymers and block copolymers of an $\alpha$-olefin including propylene, butene-1, pentene-1, hexene-1, 3-methyl-butene-1, 4-methyl-pentene-1, and octene-1, and a monomer including vinyl acetate, (meth)acrylic acid, and (meth)acrylic acid ester, and mixtures thereof.

The amount of the polyethylene-based resin is preferably 1% by weight or more and 25% by weight or less based on the total amount of the polypropylene-based resin and the polyethylene-based resin constituting the substrate film of 100. Containing 1% by weight or more of the polyethylene-based resin can improve the heat seal strength, blocking resistance, and antifogging property. The amount of the polyethylene-based resin is more preferably 5% by weight or more, and further preferably 8% by weight or more. Containing 20% by weight or less of the polyethylene-based resin makes it easy to maintain stiffness. The amount of the polyethylene-based resin is more preferably 18% by weight or less, and further preferably 15% by weight or less.

The polyethylene-based resin has a melting point of preferably 100°C or higher and 135°C or lower, and more preferably 105°C or higher and 130°C or lower from the viewpoint of the heat resistance, transparency, mechanical properties, and film forming properties. The polyethylene-based resin has a density of preferably 0.90 g/cm$^3$ or more and 0.94 g/cm$^3$ or less, and more preferably 0.91 g/cm$^3$ or more and 0.94 g/cm$^3$ or less as measured in conformity with JIS K 7112.

The polyethylene-based resin has a melt flow rate (MFR) (190°C, 2.16 kgf) of preferably 0.5 g/10min or more, more preferably 1 g/10min or more, and further preferably 2 g/10min or more. The MFR is preferably 20 g/10min or less, more preferably 15 g/10min or less, and further preferably 10 g/10min or less from the viewpoint of further stabilizing formability.

The polyethylene-based resin of the present invention may be a plant derived polyethylene-based resin from the viewpoint of reducing the environmental impact. The polyethylene-based resin has a biobased content as measured in conformity with ISO 16620 of preferably 50% or more and 100% or less, preferably 70% or more and 100% or less, and further preferably 80% or more and 100% or less.

In the present invention, the thickness of the substrate film is appropriately determined according to the application. The lower limit of the thickness of the substrate film is preferably 2 $\mu$m or more, more preferably 3 $\mu$m or more, and further preferably 4 $\mu$m or more. The upper limit of the thickness of the substrate film is preferably 300 $\mu$m or less, more preferably 250 $\mu$m or less, further preferably 200 $\mu$m or less, and particularly preferably 150 $\mu$m or less. If the substrate film is thin, handling property may be reduced. Conversely, a thick substrate film is disadvantageous in costs, and may have poor flatness when stored in a wound up roll state due to rolling habit.

The substrate film of the present invention is preferably transparent from the viewpoint of visibility of contents. Specifically, the substrate film has a haze of preferably 6% or less, more preferably 5% or less, and further preferably 4% or less. Haze tends to be worsen when stretching temperature is too high, heat fixing temperature is too high, the cooling rate of a raw sheet to be stretched is low due to too high cooling roll (CR) temperature, and the amount of low molecular weight components is too high, and the haze can be controlled to the range by adjusting these factors.

The substrate film of the present invention may be subjected to corona discharge treatment, glow discharge treatment, flame treatment, and surface roughening treatment, as long as the purpose of the present invention is not imparted. Further, the substrate film may be subjected to conventional anchor coat treatment, printing process, and ornamentation process. For anchor coating, resins generally having good adhesion, such as polyurethane and polyester are preferably used. An anchor coat layer of the present invention provided to improve a barrier property will be described later.

The packaging material of the present invention is required to include at least one substrate film having a gas barrier layer, and the packaging material may include two or more substrate films because the lamination of two or more substrate films is expected to impart improved toughness and gas barrier property to the resulting packaging material. The number of the substrate film may be determined depending on purposes. The toughness can be imparted by the use of two polypropylene-based biaxially stretched films, which generally have high puncture resistance, allowing the packaging material to be comparable to, for example, a widely used packaging material having construction of two films of different materials, a polyester film and a polyamide film. The gas barrier property may be imparted by the use of two substrate films, allowing the intermediate film not to be affected by an external environment, for example, temperature, humidity, and external bending and thus allowing the packaging material to have more stable gas barrier property. Accordingly, when two or more substrate films are used, the coating layer and the inorganic thin film layer having the gas barrier property are particularly preferably laminated on the intermediate film.

[Gas barrier layer]

In the present invention, at least one of the substrate film is required to be a laminated substrate film that includes the gas barrier layer. As the gas barrier layer, either of a coating layer (A) formed from an organic substance as a main constituent component or an inorganic thin film layer (B) formed from an inorganic substance as a main constituent component, which will be described later, is required to be laminated. Furthermore, an anchor coat layer (C), which will be described later, may be laminated to support the barrier property of the gas barrier layer, and a protection layer may also be laminated to protect the barrier layer.

[Coating layer (A)]

In the present invention, the coating layer (A) may be provided as a gas barrier layer. However, providing the coating layer (A) may increase the number of processes and thus costs, in addition to environmental impact due to difficulty in recycling that depends on film thickness; hence, the packaging material should be designed taking these points into account in the present invention.

The adhesion amount of the coating layer (A) is preferably from 0.10 $(g/m^2)$ to 0.70 $(g/m^2)$. The lower limit of the adhesion amount of the coating layer (A) is preferably 0.15 $(g/m^2)$ or more, more preferably 0.20 $(g/m^2)$ or more, and further preferably 0.25 $(g/m^2)$ or more. The upper limit is preferably 0.65 $(g/m^2)$ or less, more preferably 0.60 $(g/m^2)$ or less, and further preferably 0.55 $(g/m^2)$ or less. Although the adhesion amount of the coating layer (A) of more than 0.70 $(g/m^2)$ can improve gas barrier property, a cohesive force inside the coating layer becomes insufficient and the uniformity of the coating layer is reduced, resulting in unevenness (increased haze and blushing) and defects of coating appearance in addition to insufficient development of the gas barrier property and adhesion. In addition, increased layer thickness may disadvantageously cause blocking in terms of processability. Further, the adverse effect to the recyclability of the film and increased amount of the raw materials and solvents used may result in a greater impact on the environment. Conversely, the thickness of the coating layer (A) of less than 0.10 $(g/m^2)$ may not achieve sufficient gas barrier property and interlayer adhesion.

The resin composition used for forming the coating layer (A) on the surface of the laminated film of the present invention is desirably a polyvinyl alcohol-based polymer. The polyvinyl alcohol-based polymer has a vinyl alcohol unit as a main constituent component, and it is expected that high cohesion due to the structure resulting from hydrogen bonds may achieve significant improvement in barrier performance. The degrees of polymerization and saponification of the polyvinyl alcohol-based polymer are determined according to the desired gas barrier property and viscosity of an aqueous coating solution. The degree of polymerization is preferably 2600 or less from the viewpoint of the workability of coating since high degree of polymerization leads to a high viscosity and gelation of a coating solution, causing difficulty in coating. The degree of saponification of less than 90% may fail to achieve sufficient oxygen barrier property under high humidity, and the degree of saponification of more than 99.7% is not suitable for industrial production due to difficulty in preparation of aqueous solutions, and gelation. Accordingly, the degree of saponification is preferably from 90% to 99.7%, and further preferably from 93% to 99%. Further, in the present invention, polyvinyl alcohol-based polymers that undergone copolymerization or modification, such as a polyvinyl alcohol-based polymer copolymerized with ethylene and silanol-modified polyvinyl alcohol-based polymer may also be used as long as the processability and productivity are not imparted.

The coating layer (A) of the present invention may contain an inorganic layered compound. Containing the inorganic layered compound is expected to have a maze effect on gas, resulting in improved gas barrier property. In addition, the addition of the inorganic layered compound can reduce humidity dependence of the gas barrier property. Examples of the raw material for the inorganic layered compound include clay minerals (including synthetic products thereof) such as smectite, kaolin, mica, hydrotalcite, and chlorite. Specific examples of the raw material for the inorganic layered compound include montmorillonite, beidellite, saponite, hectorite, sauconite, stevensite, kaolinite, nacrite, dickite, halloysite, hydrolyzed halloysite, tetrasilicic mica, sodium teniolite, muscovite, margarite, phlogopite, talc, antigorite, chrysotile, pyrophyllite, vermiculite, xanthophyllite, and chlorite. Furthermore, a scale-like silica may also be used as the inorganic layered compound. These may be used alone or in combination of two or more. Among them, smectite (including synthetic products thereof) is preferred due to too high improvement effect of the water vapor barrier property.

As the inorganic layered compound, an inorganic layered compound containing a metal ion with redox property, particularly an iron ion, is preferred. Among such compounds, montmorillonite, a kind of smectite, is preferred from the viewpoint of coating applicability and a gas barrier property. As the montmorillonite, a known substances that has been used in a gas barrier agent can be used.

For example, the following is a general formula:

$$(X,Y)_{2 \text{ to } 3} Z_4 O_{10}(OH)_2 \cdot m H_2 O \cdot (W\omega)$$

(In the formula, X represents Al, Fe (III), or Cr (III); Y represents Mg, Fe (II), Mn (II), Ni, Zn, or Li; Z represents Si or Al; W represents K, Na, or Ca; $H_2O$ represents interlayer water; and m and $\omega$ represent positive real numbers.)

Among them, a substance having W of Na in the formula is preferred from the viewpoint of cleavage in an aqueous medium.

The size and shape of the inorganic layered compound are not particularly limited. The inorganic layered compound has the particle size (major axis) of preferably 5 $\mu$m or less, more preferably 4 $\mu$m or less, and further preferably 3 $\mu$m or less. The particle size of more than 5 $\mu$m may cause lowering of dispersibility, resulting in worsened coating property of the coating layer (A) and the appearance of the coating. The aspect ratio is preferably from 50 to 5000, more preferably from 100 to 4000, and further preferably from 200 to 3000.

The blending ratio of the resin composition and the inorganic layered compound in the coating layer of the present invention is preferably from 75/25 (wt%) to 35/65 (wt%), more preferably from 70/30 (wt%) to 40/60 (wt%), and further preferably from 65/35 (wt%) to 45/55 (wt%). The rate of the inorganic layered compound of less than 25% may cause insufficient barrier property. In contrast, the rate of the inorganic layered compound of more than 65% may worsen dispersity, causing worsened coating property and adhesion.

The coating layer (A) of the present invention may contain a crosslinking agent for the purpose of improving the cohesive force of the layer and wet heat resistance adhesion as long as the gas barrier property and the productivity are not impaired. Examples of the crosslinking agent include a silicon-based crosslinking agent, oxazoline compound, carbodiimide compound, epoxy compound, and isocyanate compound. Among them, the silicon-based crosslinking agent is particularly preferred because it enables cross-linking of the resin composition and the inorganic thin film layer having hydroxyl groups, thereby improving water-resistant adhesion. The silicon-based crosslinking agents typically used include metallic alkoxides and silane coupling agents. The metallic alkoxide is a compound that is represented by the general formula of $M(OR)_n$ (M: metals such as Si and Al, R: alkyl groups such as $CH_3$ and $C_2H_5$). Specific examples of the metallic alkoxide include tetraethoxysilane $[Si(OC_2H_5)_4]$ and triisopropoxy aluminum $Al[OCH(CH_3)_2]_3$. Examples of the silane coupling agent include silane coupling agents having an epoxy group such as 3-glycidoxypropyl trimethoxysilane; silane coupling agents having an amino group such as 3-aminopropyltrimethoxysilane; silane coupling agents having a mercapto group such as 3-mercaptopropyltrimethoxysilane; silane coupling agents having a isocyanate group such as 3-isocyanatepropyltriethoxysilane; and tris[3-(trimethoxysilyl)propyl] isocyanurate. In addition, an oxazoline compound, a carbodiimide compound, and an epoxy compound may also be used as the crosslinking agents. If the recyclability is important, attention should be paid to the amount of the cross-linking agent blended.

When the crosslinking agent is blended, the formulation amount of it is preferably from 0.05% by mass to 4.00% by mass, more preferably from 0.10% by mass to 3.50% by mass, and further preferably from 0.15% by mass to 3.00% by mass in the coating layer. The amount of the crosslinking agent within the above range can promote hardening of the layer and thus increase the cohesive force, resulting in a layer having high water-resistant adhesion. If the formulation amount is more than 3.00% by mass, the amount of portions that is not involved in crosslinking may increase and excessive curing may harden the layer, resulting in reduced adhesion. In contrast, the formulation amount of less than 0.05% by mass may cause insufficient cohesive force.

In the present invention, the film after the lamination of the coating layer (A) preferably has a haze of 20% or less, more preferably 18% or less, and further preferably 16% or less from the viewpoint of visibility of contents. The haze of more than 20% may significantly worsen transparency and affect the surface irregularities, causing appearance defects in the subsequent printing process. The haze can be controlled by the composition ratio, solvent conditions, and thickness of the coating layer (A). The haze is evaluated using a haze meter (model: NDH2000, manufactured by NIPPON DENSHOKU INDUSTRIES CO., LTD.) in conformity with JIS K 7136.

A method for applying the resin composition for the coating layer is not particularly limited as long as the method can form a layer through coating on the film surface. A typical coating method such as a gravure coating, reverse roll coating, wire bar coating, or die coating method may be employed.

In the formation of the coating layer (A), the resin composition for the coating layer is applied first, then preferably pre-dried at a relatively low temperature to evaporate a solvent, and is subjected to main drying at a high temperature to form a uniform layer. The pre-drying temperature is preferably from 80°C to 110°C, more preferably from 85°C to 105°C, and further preferably from 90°C to 100°C. The pre-drying temperature of lower than 80°C may cause insufficient drying of the coating layer. The pre-drying temperature of higher than 110°C may cause drying of the coating layer before the resin composition wets and spreads, resulting in appearance defects.

The main-drying temperature is preferably from 110°C to 140°C, more preferably from 115°C to 135°C, and further preferably from 120°C to 130°C. If the main drying temperature is lower than 110°C, the formation of the coating layer (A) may not proceed and thus the cohesive force and adhesion may be reduced, and the barrier property may be adversely affected. The main drying temperature of higher than 140°C may apply too much heat to the film, resulting in brittle film and increased wrinkling during heat shrinking.

The pre-drying time is preferably from 3.0 seconds to 10.0 seconds, more preferably from 3.5 seconds to 9.5 seconds, and further preferably from 4.0 seconds to 9.0 seconds. The main-drying time is preferably from 3.0 seconds to 10.0 seconds, more preferably from 3.5 seconds to 9.5 seconds, and further preferably from 4.0 seconds to 9.0 seconds. It should be noted that drying conditions change depending on the type of a heating medium and the intake and exhaust conditions of a drying furnace. In addition to the drying, additional heat treatment may be conducted at a temperature preferably in a low temperature range, specifically in the temperature range of from 40°C to 60°C, for 1 to 4 days to effectively promote the formation of the coating layer (A).

[Inorganic thin film layer (B)]

In the present invention, the inorganic thin film layer (B) may be provided on the surface of the substrate film as a gas barrier layer. The inorganic thin film layer (B) is a thin layer consisting of a metal or an inorganic oxide. Raw materials for forming the inorganic thin film layer are not particularly limited as long as thin film layer can be formed from the raw materials. As the raw materials, inorganic oxides such as silicon oxide (silica), aluminum oxide (alumina), and a mixture of silicon oxide and aluminum oxide are preferred from the viewpoint of gas barrier property. Particularly, a composite oxide of silicon oxide and aluminum oxide is preferred to achieve both of flexibility and fineness of the thin film layer. The composite oxide has a mixing ratio of the silicon oxide and the aluminum oxide based on the mass ratio of metal components and the percentage of Al is preferably from 20% by mass to 70% by mass. The Al concentration of less than 20% by mass may lower the water vapor barrier property. In contrast, the Al concentration of more than 70% by mass may harden the inorganic thin film layer and the layer may be destroyed during secondary processing such as printing and lamination, resulting in reduced gas barrier property. Silicon oxides as used herein include SiO, $SiO_2$, and mixtures thereof, and aluminium oxides as used herein include AlO, $Al_2O_3$, and mixtures thereof.

The thickness of the inorganic thin film layer (B) is typically from 1 nm to 100 nm, and preferably from 5 nm to 50 nm. The thickness of the inorganic thin film layer (B) of less than 1 nm may not achieve satisfactory gas barrier property. The thickness of more than 100 nm cannot impart improvement in the gas barrier property corresponding the excess in thickness, conversely resulting in disadvantages in bending resistance and production costs.

The method for forming the inorganic thin film layer (B) is not particularly limited, and a conventional evaporation method, for example, a vacuum deposition method, sputtering method, physical vapor deposition method (PVD method) such as an ion plating method, or chemical vapor deposition method (CVD method) may be employed. Hereinafter, a typical method for forming the inorganic thin film layer (B) will be described with an example of, silicon oxide and aluminum oxide based thin film. In the case of a vacuum deposition method, for example, a mixture of $SiO_2$ and $Al_2O_3$, or a mixture of $SiO_2$ and Al is preferably used as an evaporation source. Usually, particles are used as a raw material for vapor evaporation, and each of the particles preferably has the size that does not affect a pressure during vapor evaporation. Preferably, the particle size is from 1 mm to 5 mm. For heating, methods such as resistance heating, high frequency induction heating, electron beam heating, or laser heating method can be employed. Further, reactive vapor deposition involving the introduction of reactive gas such as oxygen, nitrogen, hydrogen, argon, carbon dioxide gas, and water vapor, ozone addition, and/or ion assist may be employed. The conditions for forming the layer may also be appropriately changed, for example, by applying bias to an object (a laminated film subjected to vapor deposition), or by cooling or heating an object. Similarly, in the case of sputtering method or CVD method, raw materials for vapor evaporation, reactive gas, bias applied to an object, heating, and/or cooling conditions may be changed.

[Anchor coat layer (C)]

In the present invention, the anchor coat layer (C) may be employed as a supporting layer for developing sufficient gas barrier property and adhesion of the gas barrier layer laminated. The anchor coat layer can prevent the appearance of an oligomer and an anti-blocking agent from the polypropylene resin. Further, the anchor coat layer may increase interlayer adhesion upon laminating another layer on the anchor coat layer (C). In particular, the anchor coat layer increase adhesion during the formation of the inorganic thin film layer and also promotes the formation of the inorganic layer by smoothing the surface; hence, it is expected that the gas barrier property can be effectively improved. In addition, the use of a raw material having a certain degree of gas barrier property (gas barrier auxiliary property) for the anchor coat layer (C) can significantly increase the gas barrier property of the film laminated with the gas barrier layer.

The gas barrier auxiliary property provided through laminating the anchor coat layer (C) alone of the film is evaluated by the oxygen transmission rate under environment at 23°C and 65% RH, and the oxygen transmission rate of 10000 ml/m²·d·MPa or less is preferred to develop high gas barrier property after the lamination of the above gas barrier layer. The oxygen transmission rate is further preferably 9000 ml/m²·d·MPa or less, and more preferably 8000 ml/m²·d·MPa or less. The oxygen transmission rate of more than 10000 ml/m²·d·MPa may lead to insufficient gas barrier property after the lamination of the gas barrier layer, making it difficult to meet applications requiring high gas barrier property.

In the present invention, the adhesion amount of the anchor coat layer (C) is preferably from 0.10 g/m² to 0.50 g/m². The adhesion amount within the range allows the anchor coat layer (C) to be uniformly formed, resulting in the layer with less coating unevenness and defects. In addition, the anchor coat layer (C) satisfying the amount can prevent the appearance of oligomers to the surface, allowing the haze after wet heat treatment to be stabilized. The adhesion amount of the anchor coat layer (C) is preferably 0.15 g/m² or more, more preferably 0.20 g/m² or more, further preferably 0.35 g/m² or more, and preferably 0.50 g/m² or less, more preferably 0.45 g/m² or less, and further preferably 0.40 g/m² or less. Although the adhesion amount of the anchor coat layer (C) of more than 0.50 g/m² can increase the gas barrier auxiliary property, the cohesive force inside the anchor coat layer may become insufficient and the uniformity of the anchor coat layer may be decreased, resulting in unevenness or defects of coating appearance. In addition, an increase in layer thickness may disadvantageously cause blocking in terms of processability and an increase in production cost. Moreover, the adverse effect to the recyclability of the film and increased amount of the raw materials and solvents used may result in a greater impact on the environment. In contrast, the thickness of the anchor coat layer (C) of less than 0.10 g/m² may not achieve sufficient gas barrier auxiliary property and interlayer adhesion.

The resin composition used for the anchor coat layer (C) of the present invention is exemplified by the one prepared by adding curing agents such as epoxy-based, isocyanate-based, and melamine-based curing agent to resins such as urethane-based, polyester-based, acryl-based, titanium-based, isocyanate-based, imine-based, and polybutadiene-based resins. Further, the resin composition may contain a crosslinking agent such as a silicon-based crosslinking agent, oxazoline compound, carbodiimide compound, or epoxy compound.

In particular, containing the urethane resin is preferred due to barrier property originating from high cohesion of the urethane bond itself, the interaction of polar groups with inorganic thin film layer, and the flexibility of the amorphous portion, which can reduce the damage of bending load. The use of a polyester resin is preferred due to the same effects. In the present invention, it is more preferred to contain a polyurethane having polyester and isocyanate as constituent components, and the addition of the silicon-based crosslinking agent is more preferred from the viewpoint of improving the adhesion.

The urethane resin used for the anchor coat layer (C) of the present invention is preferably a urethane resin that contains an aromatic or aromatic-aliphatic diisocyanate component as a main constituent component from the viewpoint of gas barrier auxiliary property. Among them, a urethane resin containing a m-xylylene diisocyanate component is particularly preferred. The use of the above resin can further enhance the cohesive force of urethane bonds by an aromatic stacking effect, resulting in high gas barrier auxiliary property.

In the present invention, the rate of the aromatic or aromatic-aliphatic diisocyanate component in the urethane resin used for the anchor coat layer (C) is preferably 50 mol% or more (from 50 mol% to 100 mol%) in 100 mol% of polyisocyanate component. The total amounts of the aromatic or aromatic-aliphatic diisocyanate component is preferably from 60 mol% to 100 mol%, more preferably from 70 mol% to 100 mol%, and further preferably from 80 mol% to 100 mol%. The total amounts of the aromatic or aromatic-aliphatic diisocyanate component of less than 50 mol% may not achieve high gas barrier auxiliary property.

The urethane resin used for the anchor coat layer (C) of the present invention may contain a crosslinking agent for the purpose of improving the cohesive force of the layer and wet and heat resistance adhesion. Examples of the crosslinking agent include a silicon-based crosslinking agent, oxazoline compound, carbodiimide compound, and epoxy compound. Among them, the silicon-based crosslinking agent is particularly preferred because it enables improvement in the water-resistant adhesion with the inorganic thin film layer. As an additional crosslinking agent, the oxazoline compound, carbodiimide compound, or epoxy compound may be used in combination.

As the silicon-based crosslinking agent, a silane coupling agent is preferred from the viewpoint of crosslinking between an inorganic substance and an organic substance. Examples of the silane coupling agent include hydrolyzable alkoxysilane compounds such as halogen-containing alkoxysilanes (chloroC2-4alkyltriC1-4alkoxysilanes including 2-chloroethyltrimethoxysilane, 2-chloroethyltriethoxysilane, 3-chloropropyltrimethoxysilane, and 3-chloropropyltriethoxysilane), alkoxysilanes having an epoxy group [glycidyloxyC2-4alkyltriC1-4alkoxysilanes including 2-glycidyloxyethyltrimethoxysilane, 2-glycidyloxyethyltriethoxysilane, 3-glycidyloxypropyltrimethoxysilane, and 3-glycidyloxypropyltriethoxysilane; glycidyloxydiC2-4alkyldiC1-4alkoxysilanes including 3-glycidyloxypropylmethyldimethoxysilane and 3-glycidyloxypropylmethyldiethoxysilane; and (epoxycycloalkyl)C2-4alkyltriC1-4alkoxysilanes including 2-(3,4-epoxycyclohexyl)ethyltrimethoxysilane, 2-(3,4-epoxycyclohexyl)ethyltriethoxysilane, and 3-(3,4-epoxycyclohexyl)propyltrimethoxysilane], alkoxysilanes having an amino group [aminoC2-4alkyltriC1-4alkoxysilanes including 2-aminoethyltrimethoxysilane, 3-aminopropyltrimethoxysilane, and 3-aminopropyltriethoxysilane; aminodiC2-4alkyldiC1-4alkoxysilanes including 3-aminopropylmethyldimethoxysilane and 3-aminopropylmethyldiethoxysilane; (2-aminoC2-4alkyl)aminoC2-4alkyltri-

C1-4alkoxysilanes including 2-[N-(2-aminoethyl)amino]ethyltrimethoxysilane, 3-[N-(2-aminoethyl)amino]propyltrimethoxysilane, and 3-[N-(2-aminoethyl)amino]propyltriethoxysilane; (aminoC2-4alkyl)aminodiC2-4alkyldiC1-4alkoxysilanes including 3-[N-(2-aminoethyl)amino]propylmethyldimethoxysilane and 3-[N-(2-aminoethyl)amino]propylmethyldiethoxysilane], alkoxysilanes having a mercapto group (mercaptoC2-4alkyltriC1-4alkoxysilanes including 2-mercaptoethyltrimethoxysilane, 3-mercaptopropyltrimethoxysilane, and 3-mercaptopropyltriethoxysilane; mercaptodiC2-4alkyldiC1-4alkoxysilanes including 3-mercaptopropylmethyldimethoxysilane and 3-mercaptopropylmethyldiethoxysilane), alkoxysilanes having a vinyl group (vinyltriC1-4alkoxysilanes including vinyltrimethoxysilane, vinyltriethoxysilane), and alkoxysilanes having an ethylenic unsaturated bond group [(meth)acryloxyC2-4alkyltriC1-4alkoxysilanes including 2-(meth)acryloxyethyltrimethoxysilane, 2-(meth)acryloxyethyltriethoxysilane, 3-(meth)acryloxypropyltrimethoxysilane, and 3-(meth)acryloxypropyltriethoxysilane; (meth)acryloxydiC2-4alkyldiC1-4alkoxysilanes including 3-(meth)acryloxypropylmethyldimethoxysilane and 3-(meth)acryloxypropylmethyldiethoxysilane). These silane coupling agents may be used alone or in combination of two or more thereof. Among them, silane coupling agent having an amino group is preferable.

The coating layer contains the silicon-based crosslinking agent in an amount of preferably from 0.05% by mass to 4.00% by mass, more preferably from 0.10% by mass to 3.50% by mass, and further preferably from 0.15% by mass to 3.00% by mass. The addition of the silicon-based crosslinking agent can promote hardening of the layer and thus increase the cohesive force, resulting in the layer having high water-resistant adhesion. In addition, the appearance of an oligomer can be prevented. Although the amount of the addition of more than 3.00% by mass can promote hardening of the layer and thus increase the cohesive force, partial generation of an unreacted portion may decrease adhesion between the layers. The amount of the addition of less than 0.05% by mass may lead to insufficient cohesive force.

The polyester resin used for the anchor coat layer (C) of the present invention is produced by polycondensation of a polycarboxylic acid component and a polyol component. The molecular weight of the polyester resin is not particularly limited as long as the polyester resin can impart sufficient toughness, suitability for coating, and solvent solubility as a coating material to the layer, and the polyester resin may have a number average molecular weight of from 1000 to 50000, and further preferably from 1500 to 30000. Terminal functional groups of the polyester are not particularly limited, and the polyester may have an alcohol end group, a carboxylic acid end group, or both. However, when the isocyanate-based curing agent is used in combination, polyester polyol with alcohol-terminated ends is required to be used.

The polyester resin used for the anchor coat layer (C) of the present invention has Tg of preferably 10°C or higher. If the polyester resin has Tg lower than the temperature, the resin after coating may have adhesiveness and thus cause blocking, making winding after coating difficult. In the case of Tg equal to or lower than 10°C, it becomes difficult to prevent blocking even in the situation where pressure near a winding core is high or an anti-blocking agent is added. The Tg is more preferably 15°C or higher, and further preferably 20°C or higher.

The polyester resin used for the anchor coat layer (C) of the present invention is produced by polycondensation of a polycarboxylic acid component and a polyol component. The polycarboxylic acid component for forming the polyester resin used in the present invention contains at least one of ortho-oriented aromatic dicarboxylic acids and anhydrides thereof. Due to the ortho-orientation solubility in a solvent can be improved, enabling uniform coating on the substrate. The uniformly formed layer can have small variation in the barrier property, preventing oligo-whitening. The ortho-orientation can increase the flexibility of the layer and thus interfacial adhesive force; hence, the damage to the substrate due to a wet heat treatment may be reduced, preventing an oligomer.

Examples of an aromatic polycarboxylic acid with substitution at an ortho position of a carboxylic acid and an anhydride thereof include orthophthalic acid and an anhydride thereof, naphthalene 2,3-dicarboxylic acid and anhydride thereof, naphthalene 1,2-dicarboxylic acid and anhydride thereof, anthraquinone 2,3-dicarboxylic acid and anhydride thereof, and 2,3-anthracene carboxylic acid and anhydride thereof. These compounds may have a substituent on any carbon atom of an aromatic ring. Examples of the substituent include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, and naphthyl group. If the polyester polyol contains the polycarboxylic acid component in an amount of from 70 mol% to 100 mol% based on 100 mol % of the total polycarboxylic acid components, the barrier property can be effectively improved and high solubility in solvent that is essential for the coating material can be obtained.

In the present invention, other polycarboxylic acid components may be involved in copolymerization as long as the effect of the present invention is not impaired. Specific examples of the polycarboxylic acid components include aliphatic polycarboxylic acids such as succinic acid, adipic acid, azelaic acid, sebacic acid, and dodecanedicarboxylic acid; polycarboxylic acids containing an unsaturated bond such as maleic anhydride, maleic acid, and fumaric acid; alicyclic polycarboxylic acids such as 1,3-cyclopentanedicarboxylic acid, and 1,4-cyclohexanedicarboxylic acid; aromatic polycarboxylic acids such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, and diphenic acid and anhydrides thereof; 1,2-bis(phenoxy)ethane-p,p'-dicarboxylic acid and anhydride thereof and ester forming derivative thereof; and p-hydroxybenzoic acid and p-(2-hydroxyethoxy)benzoic acid and ester-forming derivatives of thereof. These polybasic acids may be used alone, or two or more of them may be mixed for use in combination. Among them, succinic acid, 1,3-cyclopentanedicarboxylic acid, isophthalic acid, 2,6-naphthalenedicarboxylic acid, 1,8-naphthalic acid, and difenic acid are preferred from the viewpoint of the solubility in an organic solvent and the gas barrier property.

The polyol components of the polyester used for the anchor coat layer (C) of the present invention is not particularly limited as long as a polyester with gas barrier auxiliary property can be synthesized. The polyester preferably contains at least one polyol component selected from ethylene glycol, propylene glycol, butylene glycol, neopentyl glycol, cyclohexanedimethanol, and 1,3-bishydroxyethylbenzene. Among them, ethylene glycol is the most preferred as a main constituent component because a smaller number of carbon atoms between oxygen atoms is assumed to prevent molecular chains from becoming too flexible, making transmission of oxygen difficult.

In the present invention, it is preferred to use the above polyol components, and other polyol components may be used for copolymerization as long as the effect of the present invention is not impaired. Specific examples of the other polyol component include diols such as 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol; and trivalent or higher alcohols such as glycerol, trimethylolpropane, trimethylolethane, tris(2-hydroxyethyl)isocyanurate, 1,2,4-butanetriol, pentaerythritol, and dipentaerythritol. Among the trivalent alcohols, the use of glycerol and tris(2-hydroxyethyl)isocyanurate is particularly preferred because polyesters obtained by using the trivalent alcohols have high solubility in an organic solvent as well as high barrier property due to moderately high cross-linking density resulting from branched structure.

As the catalyst used in obtaining the polyester of the present invention, an acid catalyst may be used, and examples of the acid catalyst include tin-based catalysts such as monobutyl tin oxide and dibutyl tin oxide, titanium-based catalysts such as tetra-isopropyl-titanate and tetra-butyl-titanate, and zirconia-based catalysts such as tetra-butyl-zirconate. The above titanium-based catalyst, such as tetra-isopropyl-titanate or tetra-butyl-titanate, which has high activity for the ester reaction, and the above zirconia catalyst are preferably used in combination. The amount of the catalyst used is from 1 ppm to 1000 ppm, and more preferably from 10 ppm to 100 ppm based on the total mass of the raw materials used in the reaction. If the amount of the catalyst is less than 1 ppm, the effect of the catalyst is not sufficiently developed. If the amount of the catalyst is more than 1000 ppm, the urethane reaction with the use of isocyanate curing agent may be inhibited.

In the present invention, the use of the polyester resin as a main agent constituting the anchor coat layer (C) particularly prefers the use of the isocyanate-based curing agent upon forming a urethane resin. In this case, the anchor coat layer works cross-linkably, enabling improved heat resistance, abrasion resistance, and stiffness. Accordingly, the resulting packaging material can be used for boiling and retort packaging. However, the mixing of the curing agent results in difficulties such as inability to reuse the resulting liquid and the necessity of a curing (ageing) process after coating. The use of the coating liquid, for example, as a simple overcoat varnish has advantages in that the risk of thickening of the coating liquid can be reduced, production of coating can be easily managed, the coating liquid can be diluted again, and the curing process (so called ageing process) can be eliminated. The polyester used may have a terminal of a polyol or polycarboxylic acid, or mixture thereof. However, linear resins used for the coating layer may cause insufficient heat resistance and abrasion resistance, and difficulties in use for boiling and retort packaging.

When a curing agent is used in the coating layer, the isocyanate-based curing agent is preferred from the viewpoint of the heat resistance of the film on which the coating layer is formed. In this case, the resin component of the coating material needs to be a polyester polyol. In contrast, the use of an epoxy-based compound as the curing agent requires polyester polycarboxylic acid. In these cases, the coating layer works cross-linkably, enabling improved heat resistance, abrasion resistance, and stiffness. Accordingly, the resulting packaging material can be easily used for boiling and retort packaging. However, after the mixing of the curing agent, the resulting liquid cannot be reused, and curing process (ageing process) is disadvantageously required after coating.

The polyisocyanate compound used in the present invention reacts with at least a part of the hydroxyl groups that the polyester has. A urethane structure thus formed enables highly polarized resin component, thereby enabling enhanced aggregation of polymer chains and thus increased gas barrier property. When a linear resin is used for a coating material, cross-linking by a trivalent or higher polyisocyanate can impart heat resistance and abrasion resistance. The polyisocyanate compound used in the present invention may be a diisocyanate, trivalent or higher polyisocyanate, low molecular weight compound, or polymer compound, and a compound having an aromatic ring or an aliphatic ring in its skeleton is preferred to improve gas barrier property. Examples of the isocyanate having an aromatic ring include toluene diisocyanate, diphenylmethane diisocyanate, xylylene diisocyanate, and naphthalene diisocyanate. Examples of the isocyanate having an alicyclic ring include hydrogenated xylylene diisocyanate, hydrogenated toluene diisocyanate, isophorone diisocyanate, norboron diisocyanate, trimers of these isocyanate compounds, and terminal isocyanate group containing compounds obtained by reacting an excess amount of these isocyanate compounds with, for example, low molecular active hydrogen compounds such as ethylene glycol, propylene glycol, trimethylolpropane, glycerin, sorbitol, ethylenediamine, monoethanolamine, diethanolamine, and triethanolamine, polyester polyols, polyether polyols, and high molecular active hydrogen compounds such as polyamides.

The method for forming the anchor coat layer (C) is not particularly limited, and a conventional method, for example, coating methods, can be employed. As the coating methods, an off-line coating method and in-line coating method are preferred. In the case of the in-line coating method employed in the production process of forming the substrate film, the conditions for drying and thermal treatment during coating depend on the thickness of the coating and equipment conditions. Preferably, the coated film is sent to a process for stretching in the perpendicular direction immediately after the coating, and dried in a pre-heating zone of a stretching zone or a stretching zone at a temperature generally set to approximately from 50°C to 250°C.

A method for applying the resin composition for the anchor coat layer (C) is not particularly limited as long as the method can form a layer through coating on the film surface. A typical coating method such as a gravure coating, reverse roll coating, wire bar coating, or die coating method may be employed.

The anchor coat layer (C) may be formed by applying the resin composition for the anchor coat layer and then preferably drying by heating. The drying temperature is preferably from 100°C to 145°C, more preferably from 110°C to 140°C, and further preferably from 110°C to 130°C. The drying temperature of lower than 100°C may cause insufficient drying of the anchor coat layer. In contrast, the drying temperature of higher than 145°C may apply too much heat to the film, resulting in brittle film and worsened processability due to shrinkage. Particularly preferably, the solvent is first evaporated at a relatively low temperature condition of from 80°C to 110°C immediately after the application of the resin composition, and the resin composition applied is dried at a temperature of 120°C or higher to form a uniform film. Apart from drying, an additional heat treatment conducted at the lowest temperature possible is effective in promoting the formation of the anchor coat layer.

[Protection layer on inorganic thin film layer]

In the present invention, a protection layer may be formed on the above inorganic thin film layer as a gas barrier layer. The protection layer enables a process of direct printing on the barrier layer surface side. However, providing the protection layer increases costs due to increased number of processes and may have environmental impact due to environmental pollution by solvents used or the difficulty in recycling that depends on film thickness; hence, the packaging material should be designed taking these points into account in the present invention.

In the present invention, the adhesion amount of the protection layer is preferably from 0.10 (g/m$^2$) to 0.40 (g/m$^2$). The adhesion amount within the range allows the protection layer to be uniformly formed, resulting in the layer with less coating unevenness and defects. In addition, the cohesive force of the protection layer (D) itself increases, and the adhesion between the inorganic thin film layer and the protection layer becomes strong. The adhesion amount of the protection layer is preferably 0.13 (g/m$^2$) or more, more preferably 0.16 (g/m$^2$) or more, further preferably 0.19 (g/m$^2$) or more, and preferably 0.37 (g/m$^2$) or less, more preferably 0.34 (g/m$^2$) or less, and further preferably 0.31 (g/m$^2$) or less. The adhesion amount of the protection layer (D) of more than 0.40 (g/m$^2$) may cause insufficient cohesive force inside the protection layer and thus decrease the uniformity of the coating layer, resulting in unevenness and defects of coating appearance and insufficient development of the gas barrier property and adhesion. Conversely, the thickness of the protection layer of less than 0.10 (g/m$^2$) may not achieve sufficient gas barrier property and interlayer adhesion.

In the present invention, examples of the resin for preparing the resin composition for forming the protection layer on the surface of the inorganic thin film layer include polyvinyl alcohol-based, urethane-based, polyester-based, acryl-based, titanium-based, isocyanate-based, imine-based, and polybutadiene-based resins, and an epoxy-based, isocyanate-based, melamine-based, or silanol-based curing agent may be added.

A method for applying the resin composition for the protection layer is not particularly limited as long as the method can form a layer on the film surface. A typical coating method such as a gravure coating, reverse roll coating, wire bar coating, or die coating method can be employed.

The protection layer may be formed by applying the resin composition for the protection layer and then preferably drying by heating. The drying temperature is preferably from 100°C to 160°C, more preferably from 110°C to 150°C, further preferably from 120°C to 140°C. The drying temperature of lower than 100°C may cause insufficient drying of the protection layer. Further, formation of the protection layer and thus cohesive force and water-resistant adhesion may be reduced, resulting in decreased barrier property and hand-cutting property. In contrast, the drying temperature of higher than 160°C may apply too much heat to the film, resulting in a brittle film with reduced puncture resistance and worsened productivity due to film shrinkage. Particularly preferably, the solvent is first evaporated at a relatively low temperature condition of from 90°C to 110°C immediately after the application of the protection layer, and then the protection layer is dried at a temperature of 130°C or higher to obtain a transparent uniform film. Apart from drying, an additional heat treatment conducted at the lowest temperature possible is effective to promote the formation of the protection layer.

[Additional film]

Besides the substrate film including the polyolefin-based resin as a main constituent component, the packaging material of the present invention may further include another film as an additional film as long as the mono-material ratio, which will be described later, is satisfied. As the additional film used in the present invention, for example, a film produced by melt-extruding a plastic, stretching the resulting sheet in the longitudinal and/or width direction, if needed, cooling, and heat fixing, can be used. Examples of the plastic include polyamides such as nylon 4·6, nylon 6, nylon 6·6, and nylon 12; polyesters such as polyethylene terephthalate, polybutylene terephthalate, and polyethylene-2,6-naphthalate; and polyvinyl chloride, polyvinylidene chloride, polyvinyl alcohol, ethylene vinyl alcohol, all aromatic polyamides, polyamide imide, polyimide, polyether imide, polysulfone, polystyrene, and polylactic acid.

As the additional film, a film of any thickness may be used according to desired purposes, for example, characteristics such as mechanical properties and transparency in the present invention. The thickness is not particularly limited and is generally desired to be from 5 $\mu$m to 250 $\mu$m, and preferably from 10 $\mu$m to 60 $\mu$m for use as a packaging material. In this case, the mono-material ratio, which will be described later, should be considered.

In the present invention, the additional film may be a laminated film of one or two or more types of plastic films. When a laminated film is employed, the type of a laminate, the number of laminated layers, and a laminating method are not particularly limited, and these can be appropriately determined from known methods according to purposes.

[Heat-sealable resin layer]

The packaging material of the present invention is required be a laminate including the heat-sealable resin layer. The heat-sealable resin layer is typically formed by extruding a thermoplastic polymer for forming the heat-sealable resin layer by an extrusion laminate method or a dry laminate method, alternatively, the heat-sealable resin layer may be formed by coextrusion or by coating on the film. The heat-sealable resin layer can be formed by any thermoplastic polymer as long as sufficient adhesion can be developed, and examples of the thermoplastic polymer include polyolefin-based resins including polyethylene resins such as HDPE, LDPE, and LLDPE; and polypropylene resin, ethylene-vinyl acetate copolymer, ethylene-$\alpha$-olefin random copolymer, and ionomer resin. Among them, highly versatile LLDPE and polypropylene resin are particularly preferred from the viewpoint of durability, seal strength, price, and a mono-material approach. The thickness of the heat-sealable resin layer is preferably from 5 $\mu$m to 100 $\mu$m, further preferably from 10 $\mu$m to 95 $\mu$m, and more preferably from 15 $\mu$m to 90 $\mu$m. The thickness of less than 5 $\mu$m may cause insufficient seal strength, and further causes reduced stiffness, resulting in lowered handling property. Conversely, the thickness of more than 100 $\mu$m may cause increased stiffness, leading to reduced handling property as a packaging bag. Further, sealing at a higher temperature may be required, causing wrinkles on the front substrate film due to heat. In addition, the cost may be increased.

[Adhesive layer]

As the adhesive layer used in the present invention, a general-purpose adhesive for lamination may be used. Examples of the adhesive include (non)solvent-type, water-soluble-type, and hot-melt-type adhesives including a poly(ester)urethane-based, polyester-based, polyamide-based, polyamine-based, epoxy-based, poly(meth)acrylic-based, polyethylene imine-based, ethylene-(meth)acrylate-based, polyvinyl acetate-based, (modified)polyolefin-based, polybutadiene-based, wax-based, or casein-based main component. Among them, an adhesive that induces a cross-linking reaction in polyurethane-based, polyester-based, and polyamine-based resins is preferred from the viewpoint of heat resistance, flexibility to follow dimensional changes in each substrate, and improving the gas barrier property of the adhesive itself. However, it should be noted that the cross-linking reaction may make the layer too hard, causing reduced barrier property after bending. The adhesive layer may contain an inorganic substance such as particles to improve barrier property effectively. Examples of the method for laminating the adhesive layer include a direct gravure coating method, reverse gravure coating method, kiss coating method, die coating method, roll coating method, dip coating method, knife coating method, spray coating method, and fontaine coating method. The adhesive layer after drying has a thickness of preferably from 1 $\mu$m to 8 $\mu$m, more preferably from 2 $\mu$m to 7 $\mu$m, and further preferably from 3 $\mu$m to 6 $\mu$m to develop sufficient adhesion. The amount of coating of less than 1 $\mu$m may make lamination with over the entire surface difficult, leading to reduced adhesive force. The amount of coating of more than 8 $\mu$m takes longer time for the layer to cure completely, leading to increased unreacted matter and decreased adhesive force.

[Printing layer]

The packaging material of the present invention may further include at least one printing layer provided between the substrate film and the heat-sealable resin layer, or outside the substrate film layer or the heat-sealable resin layer.

Direct printing onto the inorganic thin film layer may cause erosion of the inorganic thin film layer by a pigment in ink and thus reduced barrier property, hence the protection layer is preferably provided. If the printing layer is provided on the barrier layer, the permeation effect of the adhesive layer into the barrier layer, the effect which will be described later, may be reduced. Accordingly, if the barrier property is important, the printing layer is preferably provided on another side to prevent the direct contact of the printing layer and the barrier layer.

As a printing ink for forming the printing layer, water-soluble type and solvent type resin-containing printing inks are preferably used. Examples of the resin used for the printing ink include an acrylic-based resin, urethane-based resin, polyester-based resin, vinyl chloride-based resin, vinyl acetate copolymer resin, and mixtures thereof. The printing ink may contain conventional additives such as an antistatic agent, light ray screening agent, ultraviolet light absorber, plasticizer, lubricant, filler, colorant, stabilizer, lubricating agent, anti-foaming agent, crosslinking agent, anti-blocking agent, and antioxidant. A printing method for providing the printing layer is not particularly limited, and a known printing method such as an offset printing method, gravure printing method, or screen printing method may be employed. After printing, a solvent may be dried by a known drying methods including hot air drying, hot roll drying, or drying using infrared.

[Characteristics of packaging material]

The packaging material of the present invention may have any laminated structure possible. In one preferred exemplary embodiment, a laminated body, in which the film laminated with the gas barrier layer is sandwiched by the substrate film without the gas barrier layer and the heat-sealable resin layer formed from a copolymer with thermoelectricity to improve the toughness and gas barrier property. In the exemplary laminated body, the printing layer may be laminated on the top substrate film, advantageously eliminating the need to print on the film having the gas barrier layer. In another preferred embodiment, the packaging material may have a laminated structure in which the substrate film is laminated with a white substrate film or heat-sealable resin layer to increase concealment property, or a UV-cut film to increase shading property.

The packaging material of the present invention is a laminated packaging material comprising at least one substrate film including a resin layer formed from a polyolefin-based resin as a main constituent component, an adhesive layer, and a heat-sealable resin layer. The at least one substrate film comprises a substrate film that is a laminated gas barrier film having a gas barrier layer. The substrate film (a) of the laminated substrate films having the lowest oxygen transmission rate is required to have the oxygen transmission rate (A) of from 30 ml/$m^2$·d·MPa to 1500 ml/$m^2$·d·MPa as measured under conditions of 23°C and 65% RH, and a laminated packaging material (p) formed by adhering the substrate film and the heat-sealable resin via the adhesive layer has the oxygen transmission rate (P) as measured under the same conditions, and the percentage improvement in barrier values before and after lamination represented by the following Formula (1) is 10 or more.

Formula (1): Percentage improvement in barrier values before and after film lamination = (A/P) In the present invention, it has been found that the barrier property is greatly improved by controlling the oxygen barrier property of the film used to the above range and adhering the film with another film via an adhesive. A polypropylene film itself has significantly low oxygen barrier property, and even very small defects of the barrier layer results in lower oxygen transmission rate than the case of a polyester film used as the substrate film. While this defect can be filled with an adhesive to compensate for the barrier property, the present inventors have found that a certain degree of defects in the barrier layer (in other words, the substrate film (a) has the oxygen transmission rate (A) within the above range) allows the highest effect of compensation. Although the reason for this phenomenon is uncertain, it is thought that a certain degree of defects allows uniform permeation of the adhesive to the interface of the substrate film (sparse area as barrier layer) through the barrier layer, increasing the barrier property of the entire layer effectively. This mechanism allows a film with a smaller number of barrier layers to achieve gas barrier property compatible to those of a film with a greater number of barrier layers.

The barrier film having a certain degree of defects in the barrier layer advantageously has flexibility due to low layer density, and thus has increased resistance to stress load by, for example, bending. In the present invention, the laminated packaging material has the oxygen transmission rate (G) of 70 ml/$m^2$·d·MPa or less after being twisted and bent 50 times at a temperature of 23°C in a twist and bend test with a Gelbo type flex-cracking tester. A packaging material having high bend resistance can be obtained by controlling the oxygen transmission rate (G) to the above range.

Further, the substrate film (a) with the oxygen transmission rate (A) controlled to the above range enables quick diffusion of the residual solvent and the reaction gas generated from the adhesive (let the solvent and the gas escape from the film). This diffusion can promote the curing reaction of the adhesive, and it is expected that the ageing during lamination can be shortened. Further, the generation of air bubbles in the laminated body can be prevented, thereby enabling a packaging material with excellent appearance. Particularly, the use of an adhesive with high barrier property improvement effect requires longer time for the volatile components to diffuse, and the effect of the present invention becomes greater. The time required for the volatile component to completely evaporate can be determined by tracking volatility of the volatile component based on a weight change starting immediately after the formation of the laminated packaging material (p), which is formed by adhering the substrate film and a heat-sealable resin via an adhesive. In the present invention, the time required for the volatile components to completely evaporate is preferably 30 hours or shorter, more preferably 25 hours or shorter, and further preferably 20 hours or shorter.

The substrate film (a) has the oxygen transmission rate (A) of preferably from 33 ml/m$^2$·d·MPa to 1350 ml/m$^2$·d·MPa, more preferably from 36 ml/m$^2$·d·MPa to 1200 ml/m$^2$·d·MPa, and further preferably from 39 ml/m$^2$·d·MPa to 1050 ml/m$^2$·d·MPa. When the oxygen transmission rate (A) is less than 30 ml/m$^2$·d·MPa, the barrier property of the substrate film (a) itself may be improved due to reduced defects in the barrier layer, but the barrier property of the packaging material including such substrate film (a) may have small improvement effect in gas barrier property. In addition, the flexing resistance barrier performance may also be worsened. Further, a longer time is required for the volatile component of the adhesive to escape. Conversely, when the oxygen transmission rate (A) is more than 1500 ml/m$^2$·d·MPa, a packaging material including such substrate film (a) may not develop a function as a barrier film due to too many defects.

The percentage improvement in barrier values before and after film lamination (A/P) is preferably 25 or more, more preferably 50 or more, and further preferably 75 or more. The (A/P) of less than 10 may lead to small improvement effect in barrier property of the packaging material, leading to worsened flexing resistance barrier performance and an increase in the amount of the residual volatile component.

The packaging material of the present invention is required to have the oxygen transmission rate as measured under conditions of 23°C and 65% RH of 60 ml/m$^2$·d·MPa or less to achieve high gas barrier property. The oxygen transmission rate is more preferably 50 ml/m$^2$·d·MPa or less, and further preferably 40 ml/m$^2$·d·MPa or less. When the oxygen transmission rate is more than 60 ml/m$^2$·d·MPa, the packaging material may not meet applications requiring high gas barrier property. Although the oxygen transmission rate of less than 0.5 ml/m$^2$·d·MPa can achieve high gas barrier property, such an oxygen transmission rate may undesirably reduce the permeation of the residual solvent outside the bag, relatively increasing the amount of the residual solvent transferred to the content. The lower limit of the oxygen transmission rate is preferably 0.5 ml/m$^2$·d·MPa or more.

The packaging material of the present invention has a water vapor transmission rate as measured under conditions of 40°C and 90% RH of preferably 5.0 g/m$^2$·d or less to develop high gas barrier property. The water vapor transmission rate is more preferably 4.0 g/m$^2$·d or less, and further preferably 3.0 g/m$^2$·d or less. The water vapor transmission rate of more than 5.0 g/m$^2$·d may not meet applications requiring high gas barrier property. Although the water vapor transmission rate of less than 0.1 g/m$^2$·d can achieve high gas barrier property, such a water vapor transmission rate may undesirably reduce the permeation of the residual solvent outside the bag, relatively increasing the amount of the residual solvent transferred to the content. The lower limit of the water vapor transmission rate is preferably 0.1 g/m$^2$·d or more.

As a criterion for evaluating the packaging material of the present invention from the viewpoint of mono-material approach, a mono-material ratio as a thickness ratio of the thickness of the olefin-based materials to the total thickness of the films and adhesive is calculated, and the mono-material ratio is preferably 70% or more, more preferably 80% or more, and further preferably 90% or more. Controlling the mono-material ratio within the range enables recycling-friendly packaging composition. The mono-material ratio of less than 70% may generate a foreign substance originating from a different material, making recycling of a packaging material difficult.

As described above, the use of the polypropylene-based resin as the polyolefin-based resin for forming the substrate film is preferred, and the use of the polypropylene-based resin in the heat-sealable resin layer enables a recycling-friendly composition. Furthermore, the use of the polypropylene-based resin alone as the polyolefin-based materials used enables much more recycling-friendly composition.

The packaging material of the present invention has the total thickness of the films and the adhesive of preferably from 20 μm to 140 μm, more preferably from 25 μm to 135 μm, and further preferably from 30 μm to 130 μm. The total thickness within the range allows for the packaging material having required physical characteristics, such as toughness and barrier property. The total thickness of less than 20 μm may lead to insufficient toughness as a bag, leading to tears or holes of a bag. In contrast, the total thickness of more than 140 μm may cause increased stiffness and thus reduced handling property, and increased cost as a packaging which is economically undesirable.

The packaging material of the present invention has high barrier property as described above, and also has high visibility and bending resistance, allowing for the use as various packaging materials. The packaging may be used in applications for sterilization by boiling or retorting treatment, deep-frozen food, vacuum packaging, and heating by a microwave oven.

The shape of the packaging using the packaging material of the present invention is not particularly limited and may have any shape. Examples of the shape of the packaging include three-side seal pouch, four-side seal pouch, stand-up pouch, and spout pouch.

A packaging bag using the packaging material of the present invention may be filled with any type of content, and the content may be a liquid, powder, or gel. The content may be or may not be food.

EXAMPLES

Hereinafter, the present invention will be described with Examples. However, the scope of the present invention is not limited to the Examples. The following methods were employed for evaluation.

(1) Film thicknesses

The film thicknesses were measured using a dial gauge in accordance with method A described in JIS K 7130: 1999.

(2) Composition and thickness of inorganic thin film layer (B)

Laminated films (after lamination of a thin layer) obtained in Examples and Comparative Examples were measured using an X-ray fluorescence analysis device (model: supermini200, manufactured by Rigaku Corporation) to determine compositions and thicknesses with a calibration curve prepared in advance. The X-ray tube was excited under conditions of 50 kV and 4.0 mA.

(3) Adhesion amount of coating layer (A) and anchor coat layer (C)

A laminated film obtained after lamination of a predetermined coating layer (A) and/or anchor coat layer (C) on the substrate film in each of Examples and Comparative Examples was prepared as a sample for testing, and a test piece having dimensions of 100 mm × 100 mm was cut out from the sample. The coating layer was wiped off with water, ethanol, or acetone from the test piece, and the adhesion amount was calculated from the mass change of the film before and after wiping.

(4) Method for evaluating oxygen transmission rate (A) of substrate film (a)

The oxygen transmission rate of the substrate film (a) of the substrate films having the lowest oxygen transmission rate in each of Examples and Comparative Examples was measured with an oxygen permeation testing analyzer (model: OX-TRAN (registered trademark) 2/22, manufactured by METEK MOCON) in an atmosphere at a temperature of 23°C and a humidity of 65% RH in accordance with method B described in JIS K 7126. The measurement was conducted in the direction of oxygen transmission, from the side laminated with the coating layer to the side without lamination of the coating layer.

[Preparation of packaging material]

(5) Preparation of packaging material for evaluation

A laminated body including one substrate film for evaluation was prepared by applying an adhesive on a substrate film in each of Examples and Comparative Examples to have a thickness of 3 μm a after drying treatment at 80°C, then dry laminating an unstretched polypropylene film, which will be described later, or a linear low density polyethylene film as a heat-sealable resin on the adhesive layer on a metal roll heated to 60°C, and ageing at 40°C for at least 96 hours.

Similarly, a packaging material including two substrate films was prepared by applying an adhesive on a substrate film described in each of Examples and Comparative Examples to have a thickness of 3 μm after drying treatment at 80°C, and dry laminating the other substrate film on the adhesive layer on a metal roll heated to 60°C. The laminate was then wound into a roll. Subsequently, the same adhesive was similarly applied to the laminate to have a thickness of 3 μm after drying treatment at 80°C, and an unstretched polypropylene film (CPP1), which will be described later, or linear low density polyethylene film as a heat-sealable resin was dry laminated on the adhesive layer on a metal roll heated to 60°C, followed by ageing at 40°C for at least 96 hours.

As the adhesive, any one of the following three types of adhesives were used. The blending rates of raw materials are presented in Table 1.

Adhesive 1: main agent A: polyamine / curing agent A: epoxy-curing type adhesive (type: C93/M100, manufactured by MITSUBISHI GAS CHEMICAL COMPANY, INC.)

Adhesive 2: main agent B: polyester / curing agent B: isocyanate-curing type adhesives (type: VM001/VM108CP, manufactured by DIC Corporation)

Adhesive 3: main agent C: polyester / curing agent C: isocyanate-curing type adhesives (type: TM569/cat10L, manufactured by Toyo-Morton, Ltd.)

(6) Method for evaluating oxygen transmission rate of packaging material

The packaging material produced in the above (5) was measured with an oxygen permeation testing analyzer (model: OX-TRAN (registered trademark) 2/22, manufactured by METEK MOCON) in an atmosphere at a temperature of 23°C and a humidity of 65% RH in accordance with method B described in JIS K 7126 to determine the oxygen transmission rate. The measurement was conducted in the direction of oxygen transmission, from the substrate film side to the heat-sealable resin layer of the packaging material.

(7) Method for evaluating oxygen transmission rate of packaging material after bend test

A test piece with dimensions of 112 inches × 8 inches was prepared from the packaging material produced in the above (5), and set to a Gelbo type flex-cracking tester (model: MIL-B131H, manufactured by Rigaku Industrial Corporation) to form a cylindrical shape with the diameter of 3(1/2) inches by holding the test piece at both ends with an initial holding distance of 7 inches. The reciprocating motion with a stroke of 3(1/2) inches and a twist of 400 degrees was repeated 25 times at a rate of 50 times/min under conditions of 23°C and 65% RH. The packaging material after the bend test was subjected to the measurement of oxygen transmission rate (after bending treatment) in the above described manner.

(8) Method for evaluating water vapor transmission rate of packaging material

The packaging material produced in the above (5) was measured with a water vapor permeation analyzer (model: PERMATRAN-W 3/33MG, manufactured by AMETEK MOCON) in an atmosphere at a temperature of 40°C and a humidity of 90% RH in accordance with method B described in JIS K 7129 to determine the water vapor transmission rate. The measurement was conducted in the direction of water vapor, from the substrate film side to the heat-sealable resin layer of the packaging material.

(9) Method for evaluating time required for complete evaporation of a volatile component in packaging material

The packaging material produced in the above (5) was formed into a sample of square with sides of 10 cm. The sample weight immediately after the dry lamination was measured, then the sample was stores in an environment at 40°C, and the weight of the sample was measured after every 5 hours to confirm the weight changes. The time until there was no further weight change, starting immediately after the dry lamination, was determined as the time required for the complete evaporation of a volatile component.

(10) Evaluation criteria for mono-material approach: mono-material ratio

As evaluation criteria for a mono-material approach, a mono-material ratio as a thickness ratio of the thickness of the olefin-based materials to the total thickness of the films and the adhesive was calculated from the packaging material produced in the above (5).

(11) Evaluation criteria for visibility and applicability to microwave oven

The packaging materials produced in the above (5) were evaluated based on an evaluation criterion for visibility and applicability to microwave oven, and a transparent packaging without a barrier layer of an aluminium foil or a barrier layer formed by aluminium vapor deposition was evaluated as "Good".
The followings are substrate films used in Examples and Comparative Examples. The substrate films were used in Examples 1 to 12 and Comparative Examples 1 to 4, and details are presented in Table 6.

[Preparation of substrate film]

Details of polyolefin-based resin raw materials, film forming conditions, and blending rates of raw materials in preparation of polyolefin-based substrate films OPP-1 to 4 are presented in Table 1 to 4.

[Table 1]

| Polypropylene-based resin | PP-1 | PP-2 | PP-3 | PP-4 |
|---|---|---|---|---|
| Raw material monomer | Propylene | Propylene | Propylene | Propylene, Ethylene |
| Type of raw material | FL203D | FS2012 | FLX80E4 | WFX4M |
| Stereoregularity of resin (Mesopentad fraction (%)) | 94.8 | 99.2 | 98.9 | Not measurable |
| Amount of copolymerized ethylene (mol%) | 0.0 | 0.0 | 0.0 | 3.0 |
| Molecular weight (Mw) | 310,000 | 320,000 | 240,000 | 220,000 |
| Molecular weight (Mn) | 56,000 | 81,000 | 65,000 | 80,000 |
| Molecular weight distribution (Mw/Mn) | 5.6 | 4.0 | 3.7 | 2.7 |
| MFR (g/10min, 230°C, 2.16 kgf) | 2.5 | 2.2 | 7.5 | 7.0 |
| Melting peak temperature from DSC (°C) | 160.8 | 162.7 | 162.4 | 125.3 |
| Melting peak area from DSC (J/g) | 99.2 | 93.0 | 94.6 | 64.3 |

[Table 2]

| Masterbatch | A | B |
|---|---|---|
| Masterbatch product name | EX-00706H | FTX0627G |
| Anti-blocking agent in masterbatch | Silicone particle | Silica particle |
| Average particle size of anti-blocking agent ($\mu$m) | 2.0 | 2.7 |
| Anti-blocking agent content in masterbatch (ppm by weight) | 50,000 | 50,000 |
| MFR of polypropylene resin in masterbatch (g/10min, 230°C, 2.16 kgf) | 2.5 | 2.5 |

[Table 3]

| Film forming conditions | a | b |
|---|---|---|
| Molten resin temperature (°C) | 250 | 250 |
| Cooling roll temperature (°C) | 40 | 30 |
| Stretching ratio in longitudinal direction (times) | 4.5 | 4.5 |
| Stretching temperature in longitudinal direction (°C) | 125 | 125 |
| Stretching ratio in transverse direction (times) | 8.2 | 8.2 |
| Preheating temperature in transverse direction (°C) | 167 | 168 |
| Stretching temperature in transverse direction (°C) | 163 | 155 |
| Heat fixing temperature (°C) | 169 | 165 |
| Relaxing rate in transverse direction (%) | 6.7 | 6.7 |

[Table 4]

| | | | | OPP-1 | OPP-2 | OPP-3 | OPP-4 | OPP-5 |
|---|---|---|---|---|---|---|---|---|
| Substrate layer (A) | Raw materials | PP-1 | % by weight | 0.00 | 100.00 | 0.00 | 0.00 | 99.00 |
| | | PP-2 | % by weight | 30.00 | 0.00 | 27.00 | 30.00 | 0.00 |
| | | PP-3 | % by weight | 70.00 | 0.00 | 70.00 | 70.00 | 0.00 |
| | | PP-4 | % by weight | 0.00 | 0.00 | 0.00 | 0.00 | 0.00 |
| | | PP-5 | % by weight | 0.00 | 0.00 | 0.00 | 0.00 | 0.00 |
| | | PE-1 | % by weight | 0.00 | 0.00 | 3.00 | 0.00 | 0.00 |
| | | Anti-static agent | % by weight | 0.00 | 0.00 | 0.00 | 0.00 | 1.00 |
| | | Anti-blocking agent content | ppm by weight | 0 | 0 | 0 | 0 | 0 |
| | Thickness | | μm | 18 | 17.7 | 17.2 | 17.7 | 17.7 |
| Surface layer (B) | Raw materials | PP-1 | % by weight | 0.0 | 95.2 | 0.0 | 0.0 | 0.0 |
| | | PP-2 | % by weight | 0.0 | 0.0 | 0.0 | 0.0 | 0.0 |
| | | PP-3 | % by weight | 0.0 | 0.0 | 0.0 | 0.0 | 0.0 |
| | | PP-4 | % by weight | 0.0 | 0.0 | 0.0 | 0.0 | 0.0 |
| | | PP-5 | % by weight | 24.8 | 0.0 | 0.0 | 0.0 | 0.0 |
| | | PP-6 | % by weight | 72.2 | 0.0 | 96.0 | 96.0 | 96.0 |
| | | Masterbatch containing anti-blocking agent | % by weight | 3.0 | 4.8 | 4.0 | 4.0 | 4.0 |
| | | Type of masterbatch | - | A | B | A | A | A |
| | Thickness | | μm | 1.0 | 1.3 | 1.0 | 1.0 | 1.0 |
| | Surface treatment | | | Corona treatment | Corona treatment | Corona treatment | Corona treatment | Corona treatment |

(continued)

|  |  |  |  | OPP-1 | OPP-2 | OPP-3 | OPP-4 | OPP-5 |
|---|---|---|---|---|---|---|---|---|
| Surface layer (C) | Raw materials | PP-1 | % by weight | 0.0 | 93.6 | 0.0 | 0.0 | 0.0 |
|  |  | PP-2 | % by weight | 0.0 | 0.0 | 0.0 | 0.0 | 0.0 |
|  |  | PP-3 | % by weight | 0.0 | 0.0 | 0.0 | 0.0 | 0.0 |
|  |  | PP-4 | % by weight | 0.0 | 0.0 | 52.0 | 52.0 | 52.0 |
|  |  | PP-5 | % by weight | 24.8 | 0.0 | 0.0 | 0.0 | 0.0 |
|  |  | PP-6 | % by weight | 72.2 | 0.0 | 45.0 | 45.0 | 45.0 |
|  |  | Masterbatch containing anti-blocking agent | % by weight | 3.0 | 6.4 | 3.0 | 3.0 | 3.0 |
|  |  | Type of masterbatch | - | A | B | A | A | A |
|  | Thickness |  | μm | 1.0 | 1.0 | 1.8 | 1.3 | 1.3 |
|  | Surface treatment |  |  | Without treatment | Without treatment | Corona treatment | Corona treatment | Corona treatment |
| Film forming conditions (See Table 3) |  |  |  | a | b | a | a | b |

(OPP-1) The substrate layer (A) was formed from a mixture obtained by blending 30% by weight of propylene homopolymer (PP, type: FS2012, manufactured by SUMITOMO CHEMICAL COMPANY, LIMITED, comonomer amount: 0 mol%, hereinafter merely "PP-2"), which had Mn of 81,000, Mw of 320,000, MFR of 2,2 g/10min, and a mesopentad fraction [mmmm] of 99,2%, and 70% bt weight of propylene homopolymer (PP, type: FLX80E4, manufactured by SUMITOMO CHEMICAL COMPANY, LIMITED, comonomer amount: 0 mol%, hereinafter merely "PP-3"), which had Mn of 65,000, Mw of 240,000, MFR of 7.5g/10min, and a mesopentad fraction [mmmm] of 98.9%, as shown in Table 1. The surface layer (B) was formed from a mixture obtained by blending from 24.8% by weight of propylene polymer "NOVATEC (registered trademark)" (PP, type: FL4,manufactured by Japan Polypropylene Corporation, hereinafter merely "PP-5"), which had Mn of 55,000, Mw of 300,000, and MFR of 5.6 g/10min, 72.2% by weight of propylene polymer (Prime Polypro, type: F-300SP, manufactured by Prime Polymer Co., Ltd., hereinafter merely "PP-6"), which had Mn of 59,000, Mw of 310,000, and MFR of 5.3 g/10min, and 3.0% by weight of a masterbatch A shown in Table 2.

Raw material resins for the substrate layer (A) were melted in a 45 mm extruder at 250°C, raw material resins for the surface layer (B) were melted in a 25 mm extruder at 250°C, and raw material resins for the second surface layer (B) were melted in a 20 mm extruder at 250°C. The molten resins were coextruded from a T-die into a sheet shape, followed by cooling and solidification by contacting the surface layer (B) with a cooling roll set at 40°C. The sheet was then stretched in the longitudinal direction (MD) at 125°C by 4.5 times. In a tenter, both edges of the film along the transverse direction (TD) were grasped with clips, then the film was preheated at 174°C, and the film was stretched in the transverse direction (TD) at 158°C by 8.2 times, followed by heat fixing at 175°C conducted while being relaxed by 6.7%. This film forming condition was defined as a film forming condition a.

As a result, a biaxially oriented polypropylene film having a structure of surface layer (B)/substrate layer (A)/second surface layer (B) was obtained.

The surface layer (B) of the biaxially oriented polypropylene film was subjected to corona treatment using a corona surface treatment system manufactured by Softal Corona & Plasma GmbH under condition of an applied current value of 0.75 A. After the corona treatment, the film was wound with a winder. The resulting film had a thickness of 20 μm (surface layer (B)/substrate layer (A)/second surface layer (B) was 1.0 μm/18.0 μm/1.0 μm in thickness). Detailed formulation is presented in Table 4.

(OPP-2)

A 20 μm thick biaxially oriented polypropylene film was produced in the same manner as the production of OPP1 except that the substrate layer (A) was prepared based on a film forming condition b in Table 3, the substrate layer (A) was formed from 100% by weight of propylene homopolymer (PP, type: FL203D, manufactured by Japan Polypropylene Corporation, comonomer amount: 0 mol%, hereinafter merely "PP-1"), which had Mn of 56,000, Mw of 310,000, MFR of 2.5 g/10min, and a mesopentad fraction [mmmm] of 94.8%, and the substrate layer (B) was formed from a mixture obtained by blending 95.2% by weight of PP-1 and 4.8% by weight of masterbatch B. Detailed formulation is presented in Table 4.

(OPP-3)

A 20 μm thick biaxially oriented polypropylene film was produced in the same manner as the production of OPP1 except that the substrate layer (A) was formed from a mixture obtained by blending 27.0% by weight of propylene homopolymer PP-2 shown in Table 1, 70.0% by weight of propylene homopolymer PP-3 shown in Table 1, and 3% by weight of ethylene homopolymer (PE-1, type: SLH218, manufactured by Braskem S.A., MFR: 2.3 g/10min, melting point: 126°C, biobased content: 84%, density: 0.916 g/cm$^3$). Detailed formulation is presented in Table 4.

(OPP-4)

A 20 μm thick biaxially oriented polypropylene film was produced in the same manner as the production of OPP1 except that the surface layer (C) was formed from a mixture obtained by blending 52.0% by weight of a propylene/ethylene copolymer (PP, product name: WINTEC (registered trademark), type: WFX4M, manufactured by Japan Polypropylene Corporation, hereinafter merely "PP-4"), which had Mn of 80,000, Mw of 220,000, and MFR 7.0 of g/10min shown in Table 1, 45.0% of PP-1, and 3.0% by weight of masterbatch A shown in Table 2. Detailed formulation is presented in Table 4.

(OPP-5)

A 20 μm thick biaxially oriented polypropylene film was produced in the same manner as the production of OPP-2 except that the substrate layer (A) was formed from a mixture obtained by blending 99.0% by weight of PP-1 and 1.0% by weight of stearyldiethanolamine stearate (type: KYM-4K, manufactured by Matsumoto Yushi-Seiyaku Co., Ltd.) as an antistatic agent. Detailed formulation is presented in Table 4.

(Other substrate film)

A transparent vapor-deposited polyester film with a thickness of 12 μm (vapor-deposited PET film, type: VE100, thickness: 12 μm, manufactured by TOYOBO CO., LTD.) was used.

(Coating layer (A))

Herein after, details of a coating liquid for forming the coating layer (A) used in Examples and Comparative Examples will be described. The coating liquid was used in Examples 1 to 12 and Comparative Examples 1 to 4 as shown in Table 6, and details are presented in Table 6.

[Polyvinyl alcohol resin (a)]

To 90 parts by mass of purified water, 10 parts by mass of a fully saponified-polyvinyl alcohol resin (product name: G Polymer OKS8049Q, degree of saponification: 99.0% or more, average polymerization degree: 450, manufactured by Nippon Synthetic Chemical Industry Co., Ltd.) was added. The mixture was heated to 80°C with stirring and was further stirred for about an hour. Then, the mixture was cooled to room temperature, and a substantially transparent polyvinyl alcohol solution (PVA solution) having a solid content of 10% was obtained.

[Inorganic layered compound dispersion liquid (b)]

To 95 parts by mass of purified water, 5 parts by mass of montmorillonite (product name: Kunipia F, manufactured by Kunimine Industries Co., Ltd.), which was an inorganic layered compound, was added with stirring, and the compound was sufficiently dispersed using a homogenizer set at 1500 rpm. The dispersion liquid was then kept at 23°C for 1 day to obtain an inorganic layered compound dispersion liquid having a solid content of 5%.

[Coating liquid 1 used for coating layer 1]

Raw materials were mixed at the following blending rate to prepare a coating liquid (a resin composition for coating layer).

| | |
|---|---|
| Ion-exchange water: | 15.00% by mass |
| Isopropyl alcohol: | 15.00% by mass |
| Polyvinyl alcohol resin (a): | 30.00% by mass |
| Inorganic layered compound dispersion liquid (b): | 40.00% by mass |

(Coating of coating liquid on film; lamination of coating layer)

The coating liquid prepared as described above was applied to the corona-treated surface of the substrate film by a gravure roll coating method, and subjected to pre-drying at 90°C for 4 seconds, followed by main drying at 120°C for 4 seconds to obtain a coating layer. The adhesion amount of the coating layer was 0.30 g/m$^2$. After that, the coating layer was subjected to post-heating at 40°C for 2 days (48 hours). As described above, a laminated film including the coating layer was produced.

(Inorganic thin film layer (B))

The following is a method for preparing an inorganic thin film layer (A) used in Examples and Comparative Examples. The inorganic thin film layer was used in Examples 1 to 12 and Comparative Examples 1 to 7 as shown in Table 5.

(Formation of inorganic thin film layer 1)

As an inorganic thin film layer 1, a composite oxide layer of silicon dioxide and aluminum oxide was formed on the substrate film or anchor coat layer by an electron beam vapor-deposition method. Particulate $SiO_2$ (purity: 99.9%) and $Al_2O_3$ (purity: 99.9%) having a size of from about 3 mm to 5 mm were used for an evaporation source. The inorganic thin film layer ($SiO_2/Al_2O_3$ composite oxide layer) included in the film thus obtained (inorganic thin film layer/film including a coating layer) had a thickness of 13 nm. The composite oxide layer had a composition $SiO_2/Al_2O_3$ (mass ratio) of 70/30.

(Formation of inorganic thin film layer 2)

As an inorganic thin film layer 2, silicon oxide was vapor-deposited on the substrate film or anchor coat layer. A silicon oxide layer with a thickness of 30 nm was formed on the film using a small vacuum vapor-deposition apparatus (model: VWR-400/ERH, manufactured by ULVAC KIKO, Inc.) by evaporation by heating of the silicon monoxide set to a evaporation source B-110 (manufactured by Nilaco Corporation) from the lower portion of its substrate, after reduction of a pressure to $10^{-3}$ Pa or less.

(Formation of inorganic thin film layer 3)

As an inorganic thin film layer 3, metal aluminum was vapor-deposited on the substrate film or anchor coat layer. A metal aluminum layer with a thickness of 30 nm was formed on the film using a small vacuum vapor-deposition apparatus (model: VWR-400/ERH, manufactured by ULVAC KIKO, Inc.) by evaporation by heating of the metal aluminum, which was an aluminum foil having a purity of 99.9% set to the evaporation source CF-305W (manufactured by Nilaco Corporation) from the lower portion of its substrate, after reduction of a pressure to $10^{-3}$ Pa or less.

(Formation of inorganic thin film layer 4)

As an inorganic thin film layer 4, aluminum oxide was vapor-deposited on the substrate film or anchor coat layer. In the method for vapor-depositing aluminum oxide on the substrate film, the film was set at the supply side of a continuous vacuum deposition apparatus and ran over a cooling drum to be wound into a roll. At the same time, the pressure of the continuous vacuum deposition apparatus was reduced to $10^{-4}$ Torr or less, and metal aluminum with purity of 99.99% was loaded into an aluminum crucible from the bottom of the cooling drum. The metal aluminum was evaporated by heating to be adhered and deposited on the film while being oxidized by oxygen introduced into the vapor, to form an aluminum oxide film with a thickness of 10 nm.

(Anchor coat layer (C))

Hereinafter, a method for preparing anchor coat layer (C) used Examples and Comparative Examples will be described.

[Polyester resin (a)]

As a polyester component, polyester polyol (type: DF-COAT GEC-004C, solid content: 30%, manufactured by DIC Corporation) was used.

[Polyisocyanate crosslinking agent (b)]

As a polyisocyanate component, a trimethylolpropane adduct of meta-xylylene diisocyanate (type: TAKENATE D-110N, solid content: 75%, manufactured by Mitsui Chemicals, Inc.) was used.

[Silane coupling agent (c)]

As a silane coupling agent, N-2-(aminoethyl)-3-aminopropyltrimethoxysilane (type: KBM-603, manufactured by Shin-Etsu Chemical Co., Ltd.) was used.

[Coating liquid 1 for anchor coat layer 1]

A solution obtained by dissolving the silane coupling agent (c) in acetone (15% by mass) was mixed with the isocyanate (b) at the following rate, and the mixture was stirred for 10 minutes using a magnetic stirrer. The solution thus obtained was diluted with methyl ethyl ketone and 1-methoxy-2-propanol (hereinafter, merely "PGM"). Further, the polyester resin (a) was added to the solution after dilution, and the coating liquid 1 desired was obtained. The mixing rate is as follows.

| | |
|---|---|
| Polyester resin (a): | 10.62% by mass |
| Isocyanate (b): | 4.07% by mass |
| Silane coupling agent (C)*acetone dilution: | 1.73% by mass |
| Methyl ethyl ketone: | 69.55% by mass |
| PGM: | 14.03% by mass |

(Coating of coating liquid on film; lamination of anchor coat layer)

The coating liquid 1 was applied to the corona-treated surface of the substrate film by a gravure roll coating method, and subjected to pre-drying at 95°C for 4 seconds, followed by main drying at 115°C for 4 seconds to obtain an anchor coat layer. The adhesion amount of the anchor coat layer was 0.40 g/m². After that, post-heating at 40°C for 4 days (96 hours) was performed to obtain a desired laminated film.

As described above, films including the coating layer, anchor coat layer, inorganic thin film layer, and/ or protection layer, in addition to the heat-sealable resin layer were produced. Adhesives used are presented in Table 5.

[Table 5]

| | Adhesive 1 | | Adhesive 2 | | Adhesive 3 | |
|---|---|---|---|---|---|---|
| | Polyamine/Epoxy | | Polyester/Isocyanate | | Polyester/Isocyanate | |
| Main agent [wt%] | Main agent A | 33.5 | Main agent B | 8.2 | Main agent C | 26.0 |
| Curing agent [wt%] | Curing agent B | 4.0 | Curing agent B | 26.0 | Curing agent C | 8.6 |
| Solvent [wt%] | Ethyl acetate | 62.5 | Ethanol | 58.2 | Ethyl acetate | 65.4 |
| | | | Ethyl acetate | 7.6 | | |
| Total amount [wt%] | | 100 | | 100 | | 100 |
| Solid content [%] | 23 | | 25 | | 25 | |

In each of Examples and Comparative Examples, the packaging material having a structure as shown in Table 6 was produced through dry laminating of packaging using an adhesive described above. As the heat-sealable resin layer, any one of the following was used.

(Heat-sealable resin)

An unstretched polypropylene film with a thickness of 30 $\mu$m (CPP1, type: P1128, manufactured by TOYOBO CO., LTD.) was used. The packaging thus obtained had structures presented in Table 6. Characteristics of the packaging were evaluated and the results are presented in Table 6.

[Table 6A]

| | Substrate film | | | | | | Adhesive (First layer) | | Substrate film | | | | | | Adhesive (Second layer) | | Heat-sealable resin layer | | Packaging material | |
|---|---|---|---|---|---|---|---|---|---|---|---|---|---|---|---|---|---|---|---|---|---|
| | First substrate film | | | | | | | | Second substrate film | | | | | | | | | | | |
| | Substrate | | Laminated structure | | | | | | Substrate | | Laminated structure | | | | | | | | Number of barrier film used [piece] | Total thickness [µm] |
| | Raw material | Thickness [µm] | Coating layer (A) | AC layer (C) | Inorganic thin film layer (B) | Protection layer (D) | Type | Thickness [µm] | Raw material | Thickness [µm] | Coating layer (A) | AC layer (C) | Inorganic thin film layer (B) | Protection layer (D) | Type | Thickness [µm] | Type | Thickness [µm] | | |
| Example 1 | OPP2 | 20 | Coating layer 1 | - | - | - | Adhesive 1 | 3 | - | | - | - | - | - | - | - | CPP1 | 30 | 1 | 53 |
| Example 2 | OPP2 | 20 | - | - | - | - | Adhesive 1 | 3 | OPP2 | 20 | - | - | Vapor-deposited inorganic thin film layer 1 | - | Adhesive 3 | 3 | CPP1 | 30 | 1 | 76 |
| Example 3 | OPP2 | 20 | - | - | - | - | Adhesive 1 | 3 | OPP3 | 20 | - | - | Vapor-deposited inorganic thin film layer 1 | - | Adhesive 3 | 3 | CPP1 | 30 | 1 | 76 |
| Example 4 | OPP2 | 20 | - | - | - | - | Adhesive 1 | 3 | OPP4 | 20 | - | - | Vapor-deposited inorganic thin film layer 1 | - | Adhesive 3 | 3 | CPP1 | 30 | 1 | 76 |
| Example 5 | OPP2 | 20 | - | - | - | - | Adhesive 1 | 3 | OPP1 | 20 | - | - | Vapor-deposited inorganic thin film layer 2 | - | Adhesive 3 | 3 | CPP1 | 30 | 1 | 76 |
| Example 6 | OPP2 | 20 | - | - | - | - | Adhesive 1 | 3 | OPP1 | 20 | - | - | | - | Adhesive 3 | 3 | CPP1 | 30 | 1 | 76 |
| Example 7 | OPP2 | 20 | - | - | - | - | Adhesive 1 | 2 | OPP1 | 20 | - | - | Vapor-deposited inorganic thin film layer 1 | - | Adhesive 3 | 3 | CPP1 | 30 | 1 | 75 |
| Example 8 | OPP2 | 20 | - | - | - | - | Adhesive 1 | 5 | OPP1 | 20 | - | - | Vapor-deposited inorganic thin film layer 1 | - | Adhesive 3 | 3 | CPP1 | 30 | 1 | 78 |
| Example 9 | OPP2 | 20 | - | - | - | - | Adhesive 2 | 2 | OPP1 | 20 | - | - | Vapor-deposited inorganic thin film layer 1 | - | Adhesive 3 | 3 | CPP1 | 30 | 1 | 75 |
| Example 10 | OPP2 | 20 | - | - | - | - | Adhesive 1 | 3 | OPP4 | 20 | - | AC-1 | Vapor-deposited inorganic thin film layer 1 | - | Adhesive 3 | 3 | CPP1 | 30 | 1 | 76 |
| Example 11 | OPP2 | 20 | - | - | - | - | Adhesive 3 | 3 | OPP4 | 20 | - | AC-1 | | - | Adhesive 3 | 3 | CPP1 | 30 | 1 | 76 |
| Example 12 | OPP2 | 20 | - | - | Vapor-deposited inorganic thin film layer 1 | - | Adhesive 1 | 3 | OPP1 | 20 | - | - | Vapor-deposited inorganic thin film layer 1 | - | Adhesive 3 | 3 | CPP1 | 30 | 2 | 76 |
| Comparative Example 1 | OPP2 | 20 | - | - | - | - | Adhesive 3 | 3 | OPP1 | 20 | - | - | Vapor-deposited inorganic thin film layer 1 | - | Adhesive 3 | 3 | CPP1 | 30 | 2 | 76 |
| Comparative Example 2 | OPP2 | 20 | - | - | - | - | Adhesive 1 | 3 | OPP5 | 20 | - | - | | - | Adhesive 3 | 3 | CPP1 | 30 | 2 | 76 |
| Comparative Example 3 | OPP2 | 20 | - | - | - | - | Adhesive 3 | 3 | OPP1 | 20 | - | AC-1 | Vapor-deposited inorganic thin film layer 1 | - | Adhesive 3 | 3 | CPP1 | 30 | 2 | 76 |
| Comparative Example 4 | PET-based vapor-deposition film | | | | | | Adhesive 3 | 3 | - | - | - | - | - | - | - | - | CPP1 | 30 | 1 | 45 |

EP 4 523 909 A1

[Table 6B]

| | Evaluation items | | | | | | | |
|---|---|---|---|---|---|---|---|---|
| | Time until volatile component in adhesive completely evaporates [hour] | Mono-material ratio | Visibility and applicability to microwave oven | Oxygen transmission rate (A) of substrate film (a) [ml/m²·d·MPa] | Oxygen transmission rate (P) of packaging material after film lamination [ml/m²·d·MPa] | Improvement in barrier values before and after film lamination (A/P) | Oxygen transmission rate (G) of packaging material after bend test [ml/m²·d·MPa] | WVTR [g/m²·d] |
| Example 1 | 60 | 94 | Good | 40 | 3.0 | 13 | 7 | 2.0 |
| Example 2 | 25 | 92 | Good | 1100 | 2.7 | 407 | 19 | 1.0 |
| Example 3 | 25 | 92 | Good | 950 | 2.7 | 352 | 20 | 1.0 |
| Example 4 | 25 | 92 | Good | 1150 | 2.7 | 426 | 18 | 1.0 |
| Example 5 | 25 | 92 | Good | 1100 | 3.0 | 367 | 17 | 1.0 |
| Example 6 | 25 | 92 | Bad | 980 | 3.0 | 327 | 17 | 1.0 |
| Example 7 | 25 | 93 | Good | 1000 | 3.1 | 323 | 15 | 0.9 |
| Example 8 | 25 | 90 | Good | 1000 | 3.1 | 323 | 21 | 0.9 |
| Example 9 | 25 | 93 | Good | 1000 | 14 | 71 | 60 | 1.2 |
| Example 10 | 50 | 92 | Good | 130 | 1.8 | 72 | 20 | 0.2 |
| Example 11 | 50 | 92 | Good | 260 | 24 | 11 | 72 | 0.8 |
| Example 12 | 25 | 92 | Good | 1000 | 2.1 | 476 | 52 | 0.5 |
| Comparative Example 1 | 25 | 92 | Good | 1000 | 172 | 6 | 576 | 1.1 |
| Comparative Example 2 | 25 | 92 | Good | 1600 | 450 | 4 | 620 | 1.2 |
| Comparative Example 3 | 35 | 92 | Good | 130 | 30 | 4 | 100 | 0.5 |
| Comparative Example 4 | 90 hours or longer | 67 | Good | 20 | 20 | 1 | 80 | 0.5 |

INDUSTRIAL APPLICABILITY

The packaging material of the present invention includes the polyolefin-based resin substrate film and the barrier layer having required characteristics that is laminated on the substrate film. The structure enabled significantly improved gas barrier property and durability for withstanding stress load during processing. Further, the lamination of the olefin-based sealant allows for mono-material approach, enabling high heat sealability of the packaging material at the same time. In addition, the packaging material of the present invention has reduced amount of volatile component, enabling packaging with less transfer of the volatile component into foods and appearance defects. Further, the packaging material can be produced easily with less processes, and volatile component can be evaporated rapidly; hence the packaging material has high cost-effectiveness as well as production stability, and also can provide a gas barrier packaging with uniform characteristics.

**Claims**

1.  A laminated packaging material comprising:

    at least one substrate film including a resin layer formed from a polyolefin-based resin as a main constituent component;
    an adhesive layer; and
    a heat-sealable resin layer, wherein

    the at least one substrate film comprises a substrate film that is a laminated gas barrier film having a gas barrier layer,
    a substrate film (a) of the laminated substrate film having the lowest oxygen transmission rate has an oxygen transmission rate (A) of from 30 ml/m$^2$·d·MPa to 1500 ml/m$^2$·d·MPa as measured under conditions of 23°C and 65% RH,
    a laminated packaging material (p) formed by adhering the substrate film and a heat-sealable resin via the adhesive layer has an oxygen transmission rate (P) of 60 ml/m$^2$·d·MPa or less as measured under the same conditions, and
    a percentage improvement in barrier values before and after lamination represented by the following Formula (1) is 10 or more.
    Formula (1): Percentage improvement in barrier values before and after film lamination = (A/P)

2.  The laminated packaging material according to claim 1, wherein the laminated packaging material has an oxygen transmission rate (G) of 65 ml/m$^2$·d·MPa or less after being twisted and bent 25 times at a temperature of 23°C in a twist and bend test with a Gelbo type flex-cracking tester.

3.  The laminated packaging material according to claim 1 or 2, wherein the laminated packaging material has a time of 30 hours or shorter until a volatile component completely evaporates immediately after the formation of the laminated packaging material (p) formed by adhering the substrate film and a heat-sealable resin via an adhesive.

4.  The laminated packaging material according to any one of claims 1 to 3, wherein the at least one substrate film comprises the substrate film (a) and another substrate film (b), the substrate film (b) is the laminated barrier film including the resin layer and a gas barrier layer, and the resin layer constituting the substrate film (a) and the resin layer constituting the substrate film (b) are formed from the same type of polyolefin-based resin as a main constituent component.

5.  The laminated packaging material according to any one of claims 1 to 4, wherein the at least one substrate film comprises no more than two substrate films.

6.  The laminated packaging material according to any one of claims 1 to 5, wherein the resin layer constituting the substrate film and the heat-sealable resin layer are formed from the same type of polyolefin-based resin as a main constituent component.

7.  The laminated packaging material according to any one of claims 1 to 6, wherein the adhesive layer is formed from a polyurethane-based, polyester-based, or polyamine-based resin material.

8. The laminated packaging material according to any one of claims 1 to 7, wherein the gas barrier layer is an inorganic thin film layer formed from any one of aluminum, aluminum oxide, silicon oxide, and a composite oxide of silicon oxide and aluminum oxide.

9. The laminated packaging material according to any one of claims 1 to 8, wherein the gas barrier layer is a coating layer formed from any one of polyvinyl alcohol resin, polyester resin, and polyurethane resin.

10. The laminated packaging material according to any one of claims 1 to 9, wherein the laminated packaging material further comprises an anchor coat layer between the substrate film and the gas barrier layer.

11. The laminated packaging material according to any one of claims 1 to 10, wherein the laminated packaging material is applicable to boiling or retort treatment.

12. The laminated packaging material according to any one of claims 1 to 10, wherein the laminated packaging material is applicable to heating by a microwave oven.

13. A packaging bag comprising the laminated packaging material according to any one of claims 1 to 12.

14. A packaging formed by covering an object with the laminated packaging material according to any one of claims 1 to 12 or the packaging bag according to claim 13.

## INTERNATIONAL SEARCH REPORT

| International application No. |
|---|
| **PCT/JP2023/016940** |

| | |
|---|---|
| **A.** | **CLASSIFICATION OF SUBJECT MATTER** |

***B32B 27/32***(2006.01)i; ***B32B 9/00***(2006.01)i; ***B32B 27/30***(2006.01)i; ***B32B 27/36***(2006.01)i; ***B32B 27/40***(2006.01)i;
***B65D 65/40***(2006.01)i
FI:  B32B27/32 Z; B32B9/00 A; B32B27/30 102; B32B27/36; B32B27/40; B65D65/40 D

According to International Patent Classification (IPC) or to both national classification and IPC

| | |
|---|---|
| **B.** | **FIELDS SEARCHED** |

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021/199637 A1 (DAINIPPON PRINTING CO LTD) 07 October 2021 (2021-10-07) claims, paragraphs [0066], [0103]-[0104], [0186], [0190], [0205], [0212], [0228]-[0234], tables 1-2, fig. 3-5, examples | 1-14 |
| A | JP 2019-026783 A (UNITIKA LTD) 21 February 2019 (2019-02-21) paragraph [0057] | 1-14 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 July 2023** | **01 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/016940**

| Patent document cited in search report | | | Publication date (day/month/year) | Patent family member(s) | Publication date (day/month/year) |
|---|---|---|---|---|---|
| WO | 2021/199637 | A1 | 07 October 2021 | (Family: none) | |
| JP | 2019-026783 | A | 21 February 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017165059 A
- JP 2000052501 A
- JP H4359033 A
- JP 2003231221 A
- WO 2017221781 A
- JP 3318479 B
- WO 2021112243 A